Europäisches Patentamt

European Patent Office

Office européen des brevets

(19)

(11) **EP 1 444 819 B1**

(12) **EUROPÄISCHE PATENTSCHRIFT**

(45) Veröffentlichungstag und Bekanntmachung des
Hinweises auf die Patenterteilung:
**21.12.2005 Patentblatt 2005/51**

(51) Int Cl.$^7$: **H04M 3/30**, H04M 3/22,
H04B 3/46

(21) Anmeldenummer: **01274679.8**

(22) Anmeldetag: **16.11.2001**

(86) Internationale Anmeldenummer:
**PCT/CH2001/000677**

(87) Internationale Veröffentlichungsnummer:
**WO 2003/043298 (22.05.2003 Gazette 2003/21)**

(54) **VERFAHREN UND SYSTEM ZUM KLASSIFIZIEREN VON NETZWERKVERBINDUNGEN**

METHOD AND SYSTEM FOR CLASSIFYING NETWORK CONNECTIONS

PROCÉDÉ ET SYST ME POUR LA CLASSIFICATION DE LIAISONS RÉSEAU

(84) Benannte Vertragsstaaten:
**AT BE CH CY DE DK ES FI FR GB GR IE IT LI LU
MC NL PT SE TR**

(43) Veröffentlichungstag der Anmeldung:
**11.08.2004 Patentblatt 2004/33**

(73) Patentinhaber: **Swisscom Fixnet AG
3050 Bern (CH)**

(72) Erfinder:
• **PYTHOUD, Frédéric
CH-1700 Fribourg (CH)**

• **SCHENKER, Rolf
CH-3073 Gümligen (CH)**
• **FRIEDERICH, Hans
CH-3068 Utzigen (CH)**

(74) Vertreter: **BOVARD AG
Optingenstrasse 16
3000 Bern 25 (CH)**

(56) Entgegenhaltungen:
**EP-A- 1 081 924          WO-A-01/01597
WO-A-01/13609          WO-A-01/41324
WO-A-99/63427**

**Beschreibung**

Die vorliegende Erfindung betrifft ein Verfahren und System zum Klassifizieren von Netzwerkverbindungen, in welchem Verfahren und System die geographischen Anfangs- und Endkoordinaten einer zu klassierenden Netzwerkverbindung zwischen einem Sender und einem Empfänger bekannt sind. Insbesondere betrifft das Verfahren Netzwerke basierend auf Kupferdrahtverbindungen, wie z.B. die letzte Meile in Telefonnetzen.

Traditionelle Telefonnetzdienste, auch als POTS (Plain Old Telephone Service) bezeichnet, verbinden üblicherweise Haushaltungen und kleinere Betriebe mit einer Verteilerstation des Telefonnetzbetreibers über Kupferdrähte, die umeinander gewunden sind und Twisted Pair genannt werden. Diese waren ursprünglich dazu gedacht, analoge Signale, insbesondere Ton- und Stimmübertragungen zu gewährleisten. Diese Anforderungen haben sich aber spätestens mit dem Aufkommen des Internets und den damit zusammenhängenden Datenströmen geändert und ändern sich heute noch einmal rasant, durch das Bedürfnis, mit Echtzeit- und Multimediaapplikationen zu Hause und/oder im Büro arbeiten zu können.

Datennetzwerke, wie z.B. Intranet und Internet, beruhen stark auf sogenannten Shared Medien, d.h. auf paketorientierten LAN (Local Area Network) oder WAN (Wide Area Network) Technologien sowohl für Breitband-Backbone zwischen Switches und Gates als auch lokale Netzwerkverbindungen mit kleineren Bandbreiten. Die Benutzung von Paketmanagersystemen, wie z.B. Bridges oder Routers, sind weit verbreitet, um die lokalen LAN-Netzwerke mit dem Internet zu verbinden. Ein Internet Router muss dabei fähig sein, Pakete, basierend auf verschiedensten Protokollen, wie z.B. IP (Internet Protocol), IPX (Internet Packet eXchange), DECNET, Apple TALK, OSI (Open System Interconnection), SNA (IBM's Systems Network Architecture) etc., entsprechend übertragen zu können. Die Komplexität solcher Netzwerke, um die Pakete weltweit verteilen zu können, ist eine Herausforderung sowohl für den Anbieter von Diensten (Provider) als auch für den Hersteller der benötigten Hardware.

Die gebräuchlichen LAN Systeme arbeiten verhältnismässig gut bei Datentransferraten von etwa 100 Mbps. Bei Transferraten oberhalb von 100 Mbps reichen bei den meisten heutigen Netzwerken die Ressourcen des Netzwerkmanagers, wie Packet-Switches, nicht aus, um die Zuweisung der Bandbreiten (Allokation) und der Userzugriffe zu verwalten. Natürlich wurde die Nützlichkeit von paketbasierenden Netzwerken zur Übermittlung digitaler Information, im speziellen bei kurzfristigen Übertragungsspitzen, seit langem erkannt. Solche Netzwerke haben gewöhnlich Point-To-Point Struktur, wobei ein Paket von einem einzelnen Absender zu einem einzelnen Empfänger geleitet wird, indem jedes Paket mindestens die Zieladresse umfasst. Ein typisches Beispiel dazu ist der bekannte IP-Header eines IP-Datenpaketes. Das Netzwerk reagiert auf das Datenpaket, indem es das Paket zur Adresse des zugeordneten Headers leitet. Paketbasierende Netzwerke könne auch dazu benutzt werden, Datentypen, die einen kontinuierlicheren Datenfluss benötigen, zu übertragen, wie z.B. Ton- und Audioübertragungen von hoher Qualität oder Videoübertragungen. Die kommerzielle Nutzung der Netzwerke macht es insbesondere wünschenswert, dass paketbasierende Übertragung auch zu mehreren Endpunkten gleichzeitig möglich ist. Ein Beispiel dazu ist das sog. Packet Broadcasting zur Übertragung von Video- oder Audiodaten. Damit lässt sich sog. Pay-TV, das heisst die kostenpflichtige Broadcastübertragung von Videodaten, über das Netzwerk realisieren.

Bei einer nächsten Generation von Applikationen, wie Echtzeit-(Realtime) und Multimediaapplikationen mit ihrem viel grösseren Bedarf an Bandbreite, die zudem zu jedem Zeitpunkt garantiert sein muss, stossen die paketorientierten Netzwerke jedoch an ihre Grenzen. So sollte eine nächste Generation von Netzwerken die Möglichkeit besitzen, die Netzwerke dynamisch zu rekonfigurieren, um dem Benutzer stets eine vordefinierte Bandbreite für angeforderte oder vereinbarte QoS Parameter (Quality of Service) garantieren zu können. Diese QoS umfassen z.B. Zugriffsgarantie, Zugriffsperformance, Fehlertoleranz, Datensicherheit etc. zwischen allen möglichen Endsystemen. Neue Technologien, wie z.B. ATM (Asynchronous Transfer Mode), sollen dabei helfen, in der Langzeitentwicklung der Netzwerke die benötigten Voraussetzungen für das private Intranet wie auch das öffentliche Internet zu schaffen. Diese Technologien versprechen eine ökonomischere und skalierbarere Lösung für solche mittels QoS-Parameter garantierten High-Performance-Verbindungen.

Eine Änderung für zukünftige Systeme wird insbesondere auch den Datenfluss betreffen. Der Datenfluss basiert heute üblicherweise auf einem Server-Client-Model, d.h. Daten werden von vielen Clients auf oder von einem oder mehreren Netzwerk-Servers übertragen. Die Clients kreieren üblicherweise keine direkte Datenverbindung, sondern sie kommunizieren via Netzwerk-Servern miteinander. Diese Art von Verbindung wird auch weiterhin ihren Stellenwert haben. Trotzdem ist zu erwarten, dass die Datenmenge, die Peer-To-Peer übertragen wird, in Zukunft stark steigen wird. Da das letztendliche Ziel der Netzwerke, um den Anforderungen zu genügen, eine wirklich dezentrale Struktur sein wird, in welchem alle Systeme sowohl als Server wie auch als Client agieren können, wird der Datenfluss durch Peer-To-Peer Verbindungen zunehmen. Damit wird das Netzwerk mehr direkte Verbindungen zu den verschiedenen Peers erzeugen müssen, wobei z.B. Desktop-Computer über das Backbone-Internet direkt verbunden werden.

Damit ist klar, dass es mit den zukünftigen Applikationen immer wichtiger werden wird, dass dem Benutzer vorausbestimmbare QoS-Parameter und grosse Bandbreiten garantiert werden können.

Zur Datenübertragung zum Endbenutzer werden insbesondere das traditionelle öffentliche Telefonnetz (PSTN: Public Switched Telephone Network) und/oder (PLMN: Public Land Mobile Network) benutzt, welche ursprünglich eigentlich zur reinen Tonübertragung ausgelegt waren, und nicht zur Übertragung von solchen Mengen digitaler Daten. Dabei spielt bei der Bestimmung der QoS-Parameter, die ein Provider oder Anbieter von Telefondiensten dem Benutzer garantieren kann, die sogenannte "letzte Meile" eine entscheidende Rolle. Als letzte Meile wird die Strecke zwischen der letzten Verteilerstation des öffentlichen Telefonnetzes und dem Endbenutzer bezeichnet. Die letzte Meile besteht in den wenigsten Fällen aus leistungsfähigen Glasfaserkabeln, sondern basiert meistens auf der gewöhnlichen Kupferdrahtverkabelung, wie z.B. Kabel mit 0.4 oder 0.6 mm Ader-Durchmesser. Die Kabel sind zudem nicht überall in geschütztem Bodenleitungsbau unterirdisch verlegt, sondern bestehen auch aus Überlandleitungen an Telefonmasten u.ä.. Dadurch entstehen zusätzliche Störungen.

Ein weiteres Problem bei der Bestimmung der maximalen QoS-Parameter ist die sog. Crosstalk-Problematik. Dieses Problem entsteht bei der Modulation des Signals auf die Leitung z.B. von Enduser zur Verteilerstation des Telefonnetzbetreibers und umgekehrt. Zur Modulation von digitalen Signalen sind im Stand der Technik z.B. die xDSL-Technologien (Digital Subscriber Line) bekannt, wie ADSL (Asymmetric Digital Subscriber Line), SDSL (Symmetric Digital Subscriber Line), HDSL (High-data-rate DSL) oder VDSL (Very high speed Digital Subscriber Line). Das erwähnte Crosstalk ist das physikalische Phänomen, das bei der Modulation von Daten über ein Kupferkabel auftritt. Benachbarte Kupferkabeldrähte innerhalb eines Kupferkabels erhalten über elektromagnetische Wechselwirkung paarweise Teilsignale, die vom Modem erzeugt werden. Dies führt dazu, dass xDSL-Modems, auf benachbarten Drähten übertragen, sich gegenseitig stören. Man unterscheidet zwischen Near-End Crosstalk (Next), welches das ungewollte Signalkoppeln von Signalen des Senders (Transmitter) am einen Ende zu den Signalen beim Empfänger (Receiver) am gleichen Ende beschreibt, und Far-End Crosstalk (FEXT), welches das ungewollte Signalkoppeln von Signalen bei der Übertragung zum Empfänger am anderen Ende beschreibt, wobei die Signale bei der Übertragung an Signale von benachbarten Kupferpaardrähten gekoppelt werden und beim Empfänger als Rauschen (Noise) erscheinen.

Obwohl heute viele Studien zu xDSL Crosstalk zugänglich sind, wie z.B. "Spectral management on metallic access networks; Part 1: Definitions and signal library", ETSI (European Telecommunications Standards Institute), TR 101 830, September 2000, gibt es wegen der Komplexität des Crosstalk-Phänomens und der restlichen Rauschparameter zur Zeit wenig brauchbare, technisch einfach zu handhabende und kostengünstige Hilfsmittel zur Bestimmung der QoS-Parameter für einen bestimmten Endbenutzer im Netz. Im Stand der Technik wurde von verschiedenen Firmen, wie z.B. Acterna (WG SLK-11/12/22, Eningen u.A., Deutschland), Trend Communications (LT2000 Line Tester, www.trendcomms.com, Buckinghamshire, U.K.) etc. Remotemesssysteme vorgeschlagen. Dabei wird die maximale Transferrate über die letzte Meile durch direkte Messungen mittels der Remotemesssystemen bestimmt: Ein digitaler Signalprozessor wird an jeder lokalen Verteilerstation eine Telefonnetzbetreibers (z.B. in der Schweiz mehrere tausend) installiert. Mittels des digitaler Signalprozessors wird eine sog. "single ended mesurement", da beim Benutzer auf der anderen Seite der letzten Meile keine Installationen von Geräten notwendig sind, durchgeführt. Die Messungen sind aber prinzipell auch möglich mittels "double ended mesurement". Dabei sind aber Installationen von Messgeräten an beiden Enden der Leitung notwendig. Die internationale Patentanmeldung WO 01/41324 A1 (Qwest Communications International Inc.) schliesslich zeigt ein Verfahren zum Klassifizieren von Netzwerkverbindungen. Dabei wird die geographische Länge eines individuellen Loops zB. mittels Strassenstreckenmessung bestimmt und eine Klassifizierung mittels Vergleich mit bekannten Neztwerkverbindungsmessungen vorgenommen.

Die Nachteile des Standes der Technik sind jedoch u.a. hohe Kosten durch die benötigte Installation von Remotemesssystemen bei jeder lokalen Verteilerstation und eine nicht genau bekannte Unsicherheit bzw. ein nicht bekannter Fehler bei der Messung, da die Messungen nur einseitig (single ended) durchgeführt werden und zur Bestimmung des Fehlers beidseitige Messungen notwendig wären. Eine zweiseitige Messung wäre aber weder vom personellen und zeitlichen Aufwand, noch vom Kostenaufwand durchführbar. Ebenso fehlen im Stand der Technik Algorithmen mit ihrer hardware- oder softwaremässigen Realisierung zum Berechnen bzw. Vorhersagen der maximal möglichen Bitraten einer Netzwerkverbindung. Eine Installation der Remotemesssysteme an den weniger zahlreichen zentralen Verteilerstationen anstelle der lokalen Endverteilerstationen zeigt, dass die Messungen mit so grossen Unsicherheiten behaftet sind, dass sie sich zur Bestimmung der maximal möglichen Datendurchsatzrate für eine bestimmte Leitung zu einem Endbenutzer nicht eignen.

Es ist eine Aufgabe dieser Erfindung, ein neues Verfahren und eine Vorrichtung zum Klassifizieren von Netzwerkverbindungen vorzuschlagen, welches die oben beschriebenen Nachteile nicht aufweist. Insbesondere sollen QoS-Parameter und im speziellen die maximal garantierbaren Bitraten für einen bestimmten Benutzer schnell und flexibel bestimmt werden können, ohne dass ein unverhältnismässiger, technischer, personeller und finanzieller Aufwand betrieben werden muss. Dies soll auch dann geschehen, wenn das.Netzwerk nur ungenau bekannte, komplizierte Verbindungsstrukturen, wie z.B. die letzte Meile, umfasst.

Gemäss der vorliegenden Erfindung wird dieses Ziel insbesondere durch die Elemente der unabhängigen Ansprüche erreicht. Weitere vorteilhafte Ausführungsformen gehen ausserdem aus den abhängigen Ansprüchen und der Beschreibung hervor.

Insbesondere werden diese Ziele durch die Erfindung dadurch erreicht, dass zum Klassifizieren von Netzwerkverbindungen geographische Koordinaten eines Senders und eines Empfängers einer zu klassierenden Netzwerkverbindung bekannt sind, dass basierend auf bekannten Daten von Netzwerkverbindungen mittels einer Verrechnungseinheit ein oder mehrere Distanzfaktoren ermittelt werden und einer bestimmbaren Wahrscheinlichkeit zugeordnet auf einen Datenträger der Verrechnungseinheit übertragen werden, wobei die Distanzfaktoren die effektive Netzwerkverbindungslänge in Abhängigkeit der Luftdistanz angeben und wobei die bestimmbare Wahrscheinlichkeit, ob eine ermittelte Netzwerkverbindungslänge kürzer oder länger als ihre effektive Netzwerklänge ist, mittels eines Sicherheitsfaktor festgelegt wird, dass basierend auf den ein oder mehreren Distanzfaktoren, dem Sicherheitsfaktor und den geographischen Koordinaten des Senders und des Empfängers der zu klassierenden Netzwerkverbindung mittels der Verrechnungseinheit die effektive Netzwerkverbindungslänge bestimmt wird und auf einen Datenträger der Verrechnungseinheit der zu klassierenden Netzwerkverbindung zugeordnet übertragen wird, dass mindestens ein Dämpfungsverteilungsfaktor basierend auf bekannten Daten von Netzwerkverbindungen bestimmt wird und auf einen Datenträger der Verrechnungseinheit übertragen wird, wobei der mindestens eine Dämpfungsverteilungsfaktor das Verhältnis der Dämpfungen unterschiedlicher Verbindungsteilstücken einer Netzwerkverbindung zueinander angibt, dass Datentransfermargins zur Bestimmung maximaler Datendurchsatzraten für verschiedene Modemtypen ermittelt und einer physikalischen Länge und Kabeldicke einer Netzwerkverbindung zugeordnet auf einem Datenträger der Verrechnungseinheit abgespeichert werden, wobei mittels einer Leistungsmessvorrichtung Leistungsspektren für die Modemtypen gemessen werden, mittels Verrechnungseinheit basierend auf den Leistungsspektren effektive Signalstärken und entsprechende Rauschlevel bestimmt werden und mittels Gausstransformationsmoduls basierend auf den Signalstärken und den Rauschlevels für verschiedene Datenübertragungsmodulationen und/oder Modulationscodierungen die Datentransfermargins für eine vordefinierte Bitrate bestimmt werden und dass, basierend auf der effektiven Netzwerkverbindungslänge, Dämpfungsverteilungsfaktor und den Datentransfermargins die zu klassierende Netzwerkverbindung mittels Verrechnungseinheit entsprechend ihrer maximalen Datendurchsatzrate klassiert wird. Ein Vorteil der Erfindung ist u.a., dass das Verfahren und System erstmals eine einfache und schnelle Bestimmung der Datentransfermargins erlaubt, ohne dabei einen immensen technischen, personellen und zeitmässigen Aufwand betreiben zu müssen. Insbesondere lassen sich die Unsicherheiten mittels der erwähnten Korrektur korrigieren, ohne dass, wie bei den Remotemesssystemen zur Messung der Datentransfermargins und/oder der Bitraten bei jeder lokalen Verteilerstation eine unterschiedliche, nicht genau bekannte Unsicherheit bzw. nicht bekannte Fehler bei der Messung korrigiert werden müssen, welcher Fehler durch die Einseitigkeit (single ended) schwer abzuschätzen ist, da zur Bestimmung des Fehler beidseitige Messungen notwendig wären.

In einer Ausführungsvariante werden als Distanzfaktoren ein Steigungsfaktor und eine Abszisse mittels der Verrechnungseinheit ermittelt, wobei eine lineare Abhängigkeit zwischen Luftdistanz und effektive Netzwerkverbindungslänge bestimmt wird. Diese Ausführungsvariante hat u.a. den Vorteil, dass sie für die meisten Abhängigkeiten von Netzwerkstrukturen genügt und innerhalb der benötigten Genauigkeit Resultate liefern kann. Dies ist für den Fachmann mehr als überraschend, da nicht erwartet werden kann, dass solch komplexe Abhängigkeiten innerhalb der gewünschten Genauigkeit einer linearen Funktion genügen. Insbesondere lineare Abhängigkeiten einfacher und schneller zu ermitteln und zu handhaben als nicht lineare.

In einer weiteren Ausführungsvariante bestimmt die Verrechnungseinheit die Distanzfaktoren als Parameter eines Polynoms von mindestens 2. Grades. Diese Ausführungsvariante hat u.a. den Vorteil, dass sie eine beliebige Genauigkeit je nach Ordnung des verwendeten Polynoms und der benötigten maximalen Abweichung für die Abhängigkeit zwischen Luftdistanz und effektiver Netzwerkverbindungslänge wiedergeben kann. Überraschend und unerwartet dabei ist aber, dass kaum Polynome sehr hohen Grades notwendig sind, um den Anforderungen dieses Verfahrens zu genügen.

In einer anderen Ausführungsvariante wird mittels des Sicherheitsfaktor eine Wahrscheinlichkeit zwischen 0.85 und 0.95 gewählt. Diese Ausführungsvariante hat u.a. den Vorteil, dass die Fehlerquote und die maximale Abweichung auf ein für das Verfahren und die Vorrichtung benötigte Genauigkeit beschränkt wird.

In einer Ausführungsvariante weist der Sicherheitsfaktor einen Wert zwischen 700 und 800. Die Einheit ist für diese Ausführungsvariante Meter (m). Diese Ausführungsvariante hat u.a. die gleichen Vorteile wie die vorhergehende Ausführungsvariante.

In einer weiteren Ausführungsvariante wird mittels eines Dämpfungsverteilungsfaktor eine lineare Abhängigkeit der Dämpfungen zueinander bestimmt. Diese Ausführungsvariante hat u.a. den Vorteil, dass sie für die meisten Abhängigkeiten von Netzwerkstrukturen genügt und innerhalb der benötigten Genauigkeit Resultate liefern kann. Dies ist für den Fachmann mehr als überraschend, da nicht erwartet werden kann, dass solch komplexe Abhängigkeiten innerhalb der gewünschten Genauigkeit einer linearen Funktion genügen. Insbesondere lineare Abhängigkeiten einfacher und schneller zu ermitteln und zu handhaben als nicht lineare. Diese Ausführungsvariante gilt insbesondere für Netzwerke mit Verbindungen bestehend aus zwei unterschiedlichen Kabel mit unterschiedlichen Aderdicken, wie z.B. Kupferkabel mit 0.4 mm und 0.6 mm Aderdurchmesser.

In einer anderen Ausführungsvariante bestimmt die Verrechnungseinheit korrigierte Datentransfermargins mittels mindestens eines Korrekturfaktors basierend auf den abgespeicherten Datentransfermargins und speichert sie den jeweiligen physikalischen Längen und Kabeladerndicken der Netzwerkverbindung zugeordnet auf einem Datenträger der Verrechnungseinheit ab, wobei der Korrekturfaktor eine mittlere Abweichung der abgespeicherten Datentransfermargins zu den effektiven Datentransfermargins umfasst. Diese Ausführungsvariante hat u.a. den Vorteil, dass Faktoren, die eine zusätzliche Abweichung der ermittelten Datentransfermargins zu den effektiven Datentransfermargins verursachen, berücksichtigt werden können. Dazu gehören z.B. Abweichungen verursacht durch eine gute oder schlechte Implementation des Modems durch den Hersteller oder durch zusätzliches internes Rauschen auf Grund von Quantisierungsrauschen oder einer schlechten gegenseitigen Anpassung des Equalizers.

In einer Ausführungsvariante werden die Rauschlevel mittels Verrechnungseinheit in Abhängigkeit mindestens von Crosstalkparameter und Anzahl Störquellen basierend auf den Leistungsspektren bestimmt.

In einer wieder anderen Ausführungsvariante gibt der mindestens eine Korrekturfaktor eine nichtlineare Abhängigkeit bezüglich der physikalischen Längen und/oder Kabeladerdicken wieder, d.h. der Korrekturfaktor kann durch eine nichtlineare Funktion, z.B. eine Polynomfunktion eines Grades höher als 1 dargestellt werden. Diese Ausführungsvariante hat u.a. den Vorteil, dass damit viel komplexere Abhängigkeiten als mit linearen Korrekturfaktoren berücksichtigt und korrigiert werden können.

In einer Ausführungsvariante wird das Leistungsspektrum in Abhängigkeit der Übertragungsfrequenz für ADSL- und/oder SDSL- und/oder HDSL-und/oder und/oder VDSL-Modemtypen gemessen. Die möglichen SDSL-Modemtypen können dabei mindestens einen G.991.2-Modemtypen und/oder die ADSL-Modemtypen mindestens einen G.992.2-Modemtypen umfassen. Mittels des Gausstransformationsmoduls können die Datentransfermargins für mindestens die Datenübertragungsmodulationen 2B1Q und/oder CAP und/oder DMT und/oder PAM bestimmt werden. Auch können mittels des Gausstransformationsmoduls die Datentransfermargins für mindestens die Trellis-Modulationscodierung bestimmt werden. Diese Ausführungsvariante hat u.a. den Vorteil, dass bei den xDSL-Modemtypen, den erwähnten Datenübertragungsmodulationen und der Trellis-Modulationscodierung gängige Standardtechnologien benutzt werden, die auf dem Markt einfach erhältlich sind und deren Benutzung sowohl in Europa als auch in der USA etc. weit verbreitet sind.

Insbesondere werden diese Ziele durch die Erfindung dadurch erreicht, dass zum Klassifizieren von Netzwerkverbindungen geographische Koordinaten eines Senders und eines Empfängers einer zu klassierenden Netzwerkverbindung bekannt sind, dass basierend auf bekannten Daten von Netzwerkverbindungen mittels einer Verrechnungseinheit ein oder mehrere Distanzfaktoren ermittelt werden und einer bestimmbaren Wahrscheinlichkeit zugeordnet auf einen Datenträger der Verrechnungseinheit übertragen werden, wobei die Distanzfaktoren die effektive Netzwerkverbindungslänge in Abhängigkeit der Luftdistanz angeben und wobei die bestimmbare Wahrscheinlichkeit, ob eine ermittelte Netzwerkverbindungslänge kürzer oder länger als ihre effektive Netzwerklänge ist, mittels eines Sicherheitsfaktor festgelegt wird, dass basierend auf den Distanzfaktoren, dem Sicherheitsfaktor und den geographischen Koordinaten des Senders und des Empfängers der zu klassierenden Netzwerkverbindung mittels der Verrechnungseinheit die effektive Netzwerkverbindungslänge bestimmt wird und auf einen Datenträger der Verrechnungseinheit der zu klassierenden Netzwerkverbindung zugeordnet übertragen wird, dass mindestens ein Dämpfungsverteilungsfaktor basierend auf bekannten Daten von Netzwerkverbindungen bestimmt wird und auf einen Datenträger der Verrechnungseinheit übertragen wird, wobei der mindestens eine Dämpfungsverteilungsfaktor das Verhältnis der Dämpfungen unterschiedlicher Verbindungteilstücken einer Netzwerkverbindung zueinander angibt, dass Bitraten zur Bestimmung maximaler Datendurchsatzraten für verschiedene Modemtypen ermittelt und einer physikalischen Länge und Kabeldicke einer Netzwerkverbindung zugeordnet auf einem Datenträger der Verrechnungseinheit abspeichert werden, wobei mittels einer Leistungsmessvorrichtung Leistungsspektren für die Modemtypen gemessen werden, mittels Verrechnungseinheit basierend auf den Leistungsspektren effektive Signalstärken und entsprechende Rauschlevel bestimmt werden und mittels Gausstransformationsmoduls basierend auf den Signalstärken und den Rauschlevels für verschiedene Datenübertragungsmodulationen und/oder Modulationscodierungen die Bitraten für einen vordefinierten Datentransfermargin bestimmt werden und dass basierend auf der effektiven Netzwerkverbindungslänge, Dämpfungsverteilungsfaktor und den Datentransfermargins die zu klassierende Netzwerkverbindung mittels Verrechnungseinheit entsprechend ihrer maximalen Datendurchsatzrate klassiert wird. Diese Ausführungsvariante hat u.a. den Vorteil, dass das Verfahren und System erstmals eine einfache und schnelle Bestimmung der Bitraten erlaubt, ohne dabei einen immensen technischen, personellen und zeitmässigen Aufwand betreiben zu müssen. Insbesondere lassen sich die Unsicherheiten mittels der erwähnten Korrektur korrigieren, ohne dass wie bei den Remotemesssystemen zur Messung der Datentransfermargins und/oder der Bitraten bei jeder lokalen Verteilerstation eine unterschiedliche, nicht genau bekannte Unsicherheit bzw. nicht bekannte Fehler bei der Messung korrigiert werden müssen, welche Fehler durch die Einseitigkeit (single ended) schwer abzuschätzen sind, da zur Bestimmung des Fehler beidseitige Messungen notwendig wären.

In einer Ausführungsvariante werden als Distanzfaktoren ein Steigungsfaktor und eine Abszisse mittels der Verrechnungseinheit ermittelt, wobei eine lineare Abhängigkeit zwischen Luftdistanz und effektive Netzwerkverbindungslänge bestimmt wird. Diese Ausführungsvariante hat u.a. den Vorteil, dass sie für die meisten Abhängigkeiten von Netzwerkstrukturen genügt und innerhalb der benötigten Genauigkeit Resultate liefern kann. Dies ist für den Fachmann mehr als überraschend, da nicht erwartet werden kann, dass solch komplexe Abhängigkeiten innerhalb der gewünschten Genauigkeit einer linearen Funktion genügen. Insbesondere lineare Abhängigkeiten einfacher und schneller zu ermitteln und zu handhaben als nicht lineare.

In einer weiteren Ausführungsvariante bestimmt die Verrechnungseinheit die Distanzfaktoren als Parameter eines Polynoms von mindestens 2. Grades. Diese Ausführungsvariante hat u.a. den Vorteil, dass sie eine beliebige Genauigkeit je nach Ordnung des verwendeten Polynoms und der benötigten maximalen Abweichung für die Abhängigkeit zwischen Luftdistanz und effektiver Netzwerkverbindungslänge wiedergeben kann. Überraschend und unerwartet dabei ist aber, dass kaum Polynome sehr hohen Grades notwendig sind, um den Anforderungen dieses Verfahrens zu genügen.

In einer anderen Ausführungsvariante wird mittels des Sicherheitsfaktor eine Wahrscheinlichkeit zwischen 0.85 und 0.95 gewählt. Diese Ausführungsvariante hat u.a. den Vorteil, dass die Fehlerquote und die maximale Abweichung auf ein für das Verfahren und die Vorrichtung benötigte Genauigkeit beschränkt wird.

In einer Ausführungsvariante weist der Sicherheitsfaktor einen Wert zwischen 700 und 800. Die Einheit ist für diese Ausführungsvariante Meter (m). Diese Ausführungsvariante hat u.a. die gleichen Vorteile wie die vorhergehende Ausführungsvariante.

In einer weiteren Ausführungsvariante wird mittels eines Dämpfungsverteilungsfaktor eine lineare Abhängigkeit der Dämpfungen zueinander bestimmt. Diese Ausführungsvariante hat u.a. den Vorteil, dass sie für die meisten Abhängigkeiten von Netzwerkstrukturen genügt und innerhalb der benötigten Genauigkeit Resultate liefern kann. Dies ist für den Fachmann mehr als überraschend, da nicht erwartet werden kann, dass solch komplexe Abhängigkeiten innerhalb der gewünschten Genauigkeit einer linearen Funktion genügen. Insbesondere lineare Abhängigkeiten einfacher und schneller zu ermitteln und zu handhaben als nicht lineare. Diese Ausführungsvariante gilt insbesondere für Netzwerke mit Verbindungen bestehend aus zwei unterschiedlichen Kabeladerdicken, wie z.B. Kupferkabel mit 0.4 mm und 0.6 mm Ader-Durchmesser.

In einer anderen Ausführungsvariante bestimmt die Verrechnungseinheit korrigierte Bitraten mittels mindestens eines Korrekturfaktors basierend auf den abgespeicherten Bitraten und speichert sie den jeweiligen physikalischen Längen und Kabeladerdicken der Netzwerkverbindung zugeordnet auf einem Datenträger der Verrechnungseinheit ab, wobei der Korrekturfaktor eine mittlere Abweichung der abgespeicherten Bitraten zu den effektiven Bitraten umfasst. Diese Ausführungsvariante hat u.a. den Vorteil, dass Faktoren, die eine zusätzliche Abweichung der ermittelten Bitraten zu den effektiven Bitraten verursachen, berücksichtigt werden können. Dazu gehören z.B. Abweichungen verursacht durch gute oder schlechte Implementation des Modems durch den Hersteller oder durch zusätzliches internes Rauschen auf Grund von Quantisierungsrauschen (Analog- zu Digitalwandlung) oder einer schlechten gegenseitigen Anpassung des Equalizers.

In einer Ausführungsvariante wird das Leistungsspektrum in Abhängigkeit der Übertragungsfrequenz für ADSL- und/oder SDSL- und/oder HDSL- und/oder und/oder VDSL-Modemtypen gemessen. Die möglichen SDSL-Modemtypen können dabei mindestens einen G.991.2-Modemtypen und/oder die ADSL-Modemtypen mindestens einen G. 992.2-Modemtypen umfassen. Mittels des Gausstransformationsmoduls können die Datentransfermargins für mindestens die Datenübertragungsmodulationen 2B1Q und/oder CAP und/oder DMT und/oder PAM bestimmt werden. Auch können mittels des Gausstransformationsmoduls die Datentransfermargins für mindestens die Trellis-Modulationscodierung bestimmt werden. Diese Ausführungsvariante hat u.a. den Vorteil, dass bei den xDSL-Modemtypen, den erwähnten Datenübertragungsmodulationen und der Trellis-Modulationscodierung gängige Standardtechnologien benutzt werden, die auf dem Markt einfach erhältlich sind und deren Benutzung sowohl in Europa als auch in der USA etc. weit verbreitet sind.

In einer weiteren Ausführungsvariante umfasst der Korrekturfaktor eine nichtlineare Abhängigkeit bezüglich der physikalischen Längen und/oder Kabeladerdicken, d.h. der Korrekturfaktor kann durch eine nichtlineare Funktion, z.B. eine Polynomfunktion eines Grades höher als 1 dargestellt werden. Diese Ausführungsvariante hat u.a. den Vorteil, dass damit viel komplexere Abhängigkeiten als mit linearen Korrekturfaktoren berücksichtigt und korrigiert werden können.

In einer weiteren Ausführungsvariante werden mittels des Gausstransformationsmoduls die Bitraten für Datentransfermargins zwischen 3 und 9 dB bestimmt. Diese Ausführungsvariante hat u.a. den Vorteil, dass der Bereich zwischen 3 und 9 dB einen Empfang mit den meisten Anforderungen genügenden QoS-Parameter erlaubt. Insbesondere erlaubt der Bereich der Datentransfermargins zwischen 3 und 9 dB eine Optimierung der Bitrate bezüglich den anderen QoS-Parametern.

In einer weiteren Ausführungsvariante werden mittels des Gausstransformationsmoduls die Bitraten für einen Datentränsfermargin 6 dB bestimmt. Diese Ausführungsvariante hat u.a. die gleichen Vorteile, wie die vorhergehende Ausführungsvariante. Insbesondere erlaubt wie oben, ein Datentransmargin von 6 dB eine Optimierung der Bitrate bezüglich den anderen QoS-Parametern.

An dieser Stelle soll festgehalten werden, dass sich die vorliegende Erfindung neben dem erfindungsgemässen Verfahren auch auf eine Vorrichtung zur Ausführung dieses Verfahrens bezieht.

Nachfolgend werden Ausführungsvarianten der vorliegenden Erfindung anhand von Beispielen beschrieben. Die Beispiele der Ausführungen werden durch folgende beigelegte Figuren illustriert:

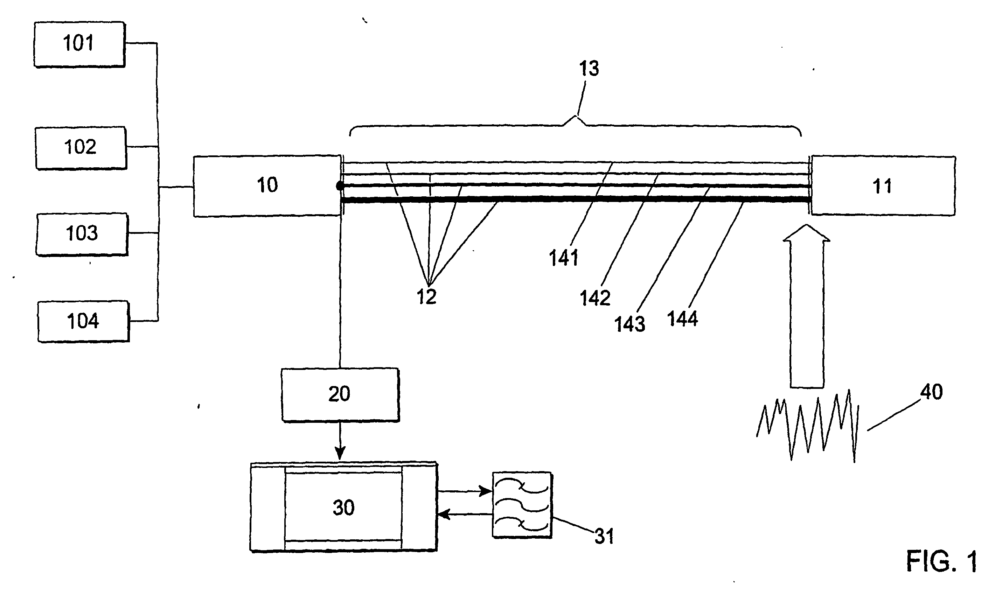

Figur 1 zeigt ein Blockdiagramm, welches schematisch die Architektur einer Ausführungsvariante eines erfindungsgemässen Systems zur Bestimmung von Datentransfermargins bzw. Bitraten für eine Netzwerkverbindung 12 mit einer bestimmten physikalische Länge 13 zwischen einem Sender 10 und einem Empfänger 11 zeigt.

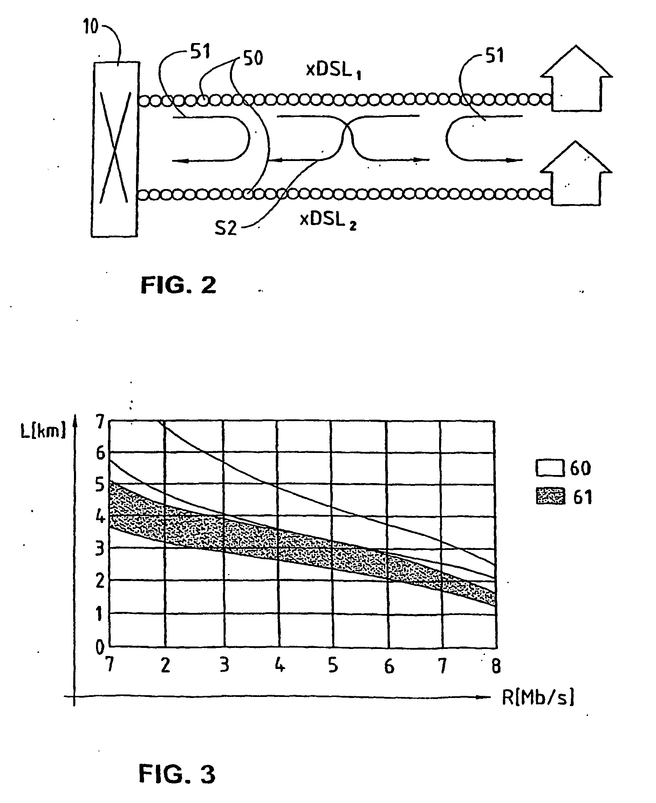

Figur 2 zeigt schematisch eine Crosstalk-Interaktion mit Near-End Crosstalk (Next) 51, welches das ungewollte Koppeln vom Signalen 50 des Senders 10 (Transmitter) am einen Ende zu den Signalen 50 beim Empfänger 11 (Receiver) am gleichen Ende beschreibt, und Far-End Crosstalk (FEXT) 52, welches das ungewollte Koppeln von Signalen 50 bei der Übertragung zum Empfänger 11 am anderen Ende beschreibt, wobei die Signale 50 bei der Übertragung an Signale 50 von benachbarten Kupferpaardrähten koppelt und beim Empfänger 11 als Rauschen (Noise) erscheint.

Figur 3 zeigt schematisch die Übertragungsdistanz der Netzwerkverbindung in Abhängigkeit der Übertragungsrate (Bitrate) für ADSL-Modems, wie sie mit einem erfindungsgemässen System erhalten werden kann. Die Referenznummern 60 und 61 bezeichnen dabei unterschiedliche Rauschumgebungen.

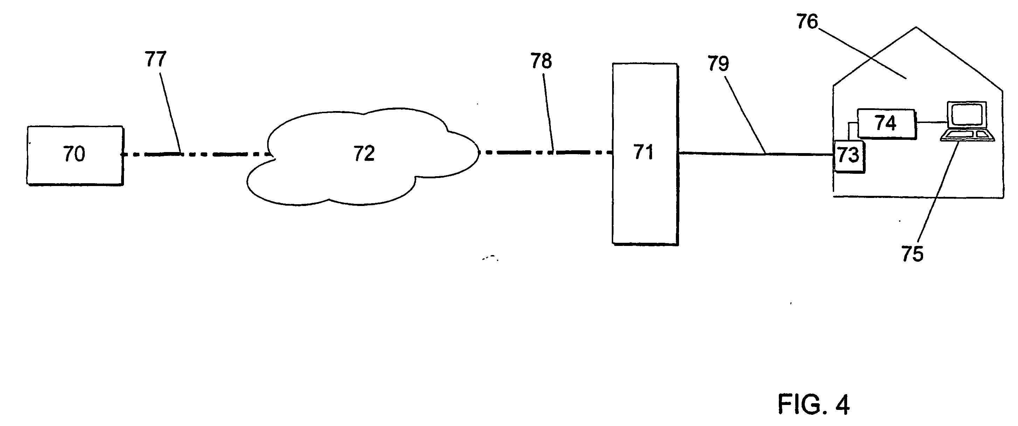

Figur 4 zeigt schematisch die sog. letzte Meile des öffentlichen Telefonnetzes (PSTN: Public Switched Telephone Network), wie sie typischerweise zwischen dem Endbenutzer zu Hause und einem Netzwerk, welches über das öffentliche Telefonnetz erreicht werden soll, besteht.

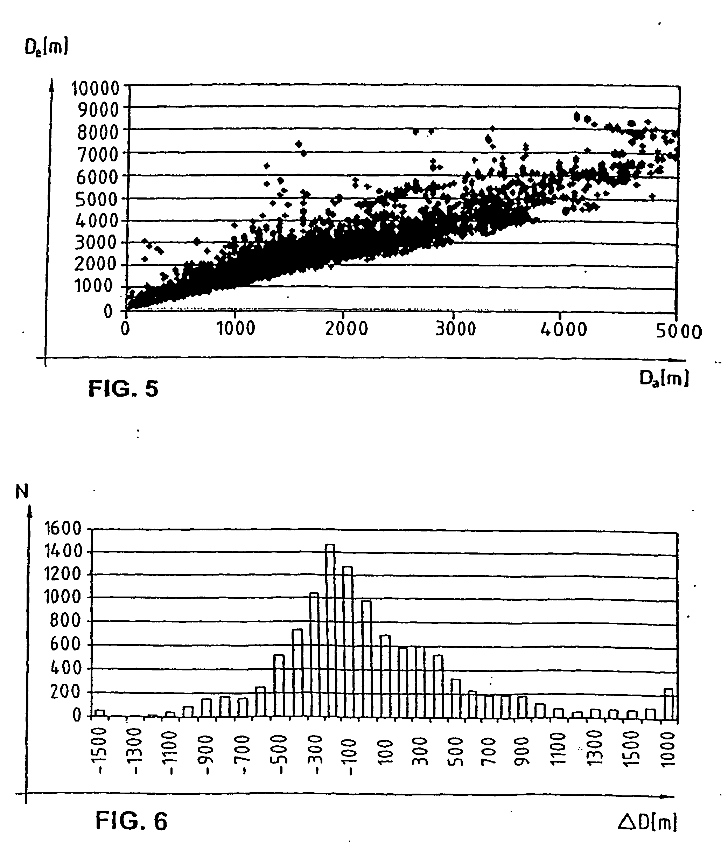

Figur 5 zeigt ein Diagramm eines Beispieles eines Datensamples für ein bestehendes Netzwerk, wobei das Datensample 200'000 gemessene Netzwerkverbindung der letzten Meile eines Telefonnetzwerks umfasst.

Figur 6 zeigt ein Diagramm mit der mittleren Abweichung der effektiven Netzwerkverbindungslänge $D_e$ von der ermittelten Netzwerkverbindungslänge $D_a$. Die X-Achse gibt die mittlere Abweichung $\Delta D$ in Meter an und die Y-Achse die Grösse des verwendeten Datensamples, d.h. die Anzahl N bekannter Netzwerkverbindungen.

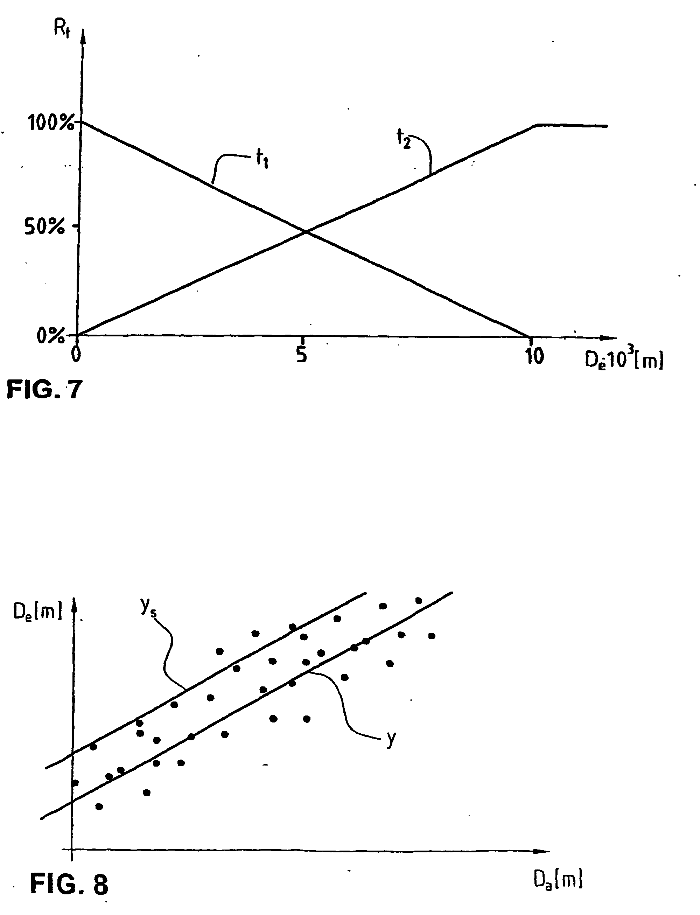

Figur 7 zeigt schematisch das Verhältnis $R_t$ von 0.4 mm Kupferkabel $t_1$ zu 0.6 mm Kupferkabel $t_2$ auf der letzten Meile im öffentlichen Telefonnetzwerk. Die X-Achse gibt die effektive Netzwerkverbindungslänge $D_e$, d.h. ihre physikalische Länge an, und die Y-Achse die Anteile $R_t$ eines jeweiligen Kabeltypen in Prozenten.

Figur 8 zeigt ein Diagramm eines Beispieles einer Bestimmung 2011/2012 der ein oder mehreren Distanzfaktoren sowie des Sicherheitsfaktor. In Analogie zur Figur 5 gibt die X-Achse dabei die effektive Netzwerkverbindungslänge $D_e$ in Meter an und die Y-Achse die Luftdistanz der Netzwerkverbindungen $D_a$ ebenfalls in Meter.

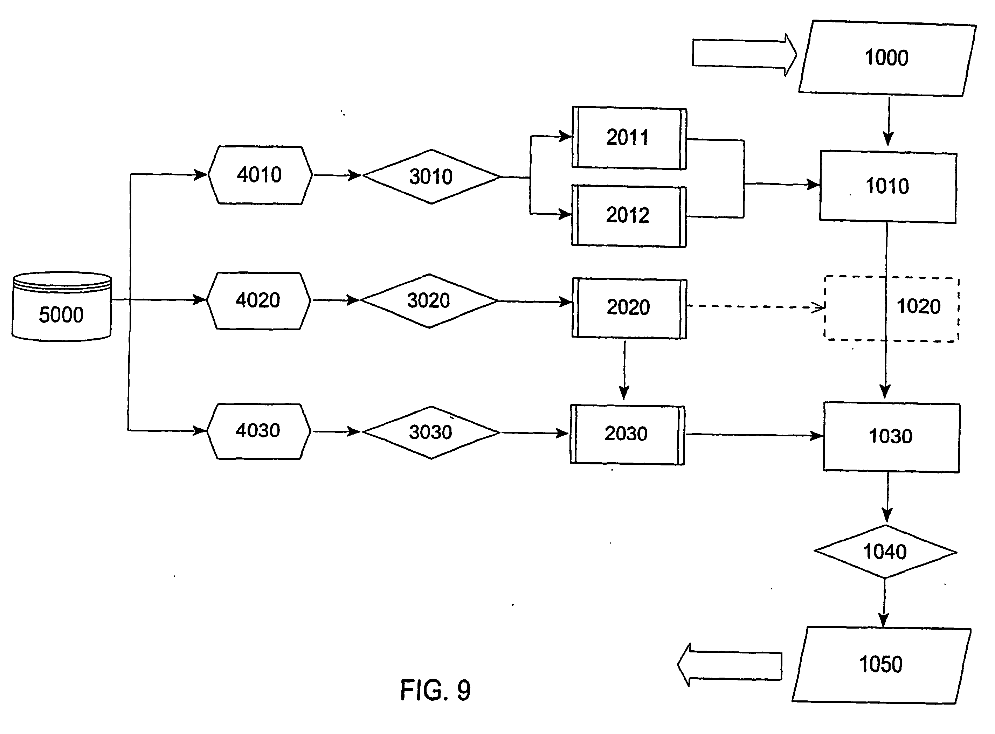

Figur 9 stellt schematisch den Ablauf eines erfindungsgemässen Verfahrens dar. Die vierstelligen Referenznummern beziehen sich jeweils auf Figur 9.

Figur 1 illustriert eine Architektur, die zur Realisierung der Erfindung verwendet werden kann. In diesem Ausführungsbeispiel für das Verfahren und die Vorrichtung zum Klassifizieren von Netzwerkverbindungen sind die geographischen Koordinaten eines Senders 10 und eines Empfängers 11 einer zu klassierenden Netzwerkverbindung 12 bekannt 1000. Die Koordinaten können z.B. in Längen- und Breitengrade mit genügender Genauigkeit angegeben sein, aber auch andere Koordinaten oder Ortsangaben zur Bezeichnung der relativen, geographischen Lage von Sender 10 und Empfänger 11 zueinander sind vorstellbar. Um z.B. bestimmen zu können, ob eine bestimmte Netzwerkverbindung, beispielsweise eine xDSL-Verbindung, für einen Anschluss funktioniert, muss die effektive Kabellänge innerhalb einer bekannten Abweichung bekannt sein. In der Praxis ist häufig jedoch nur die Luftdistanz mit einem vertretbaren Aufwand (Kosten, Zeit, Personal- und Materialaufwand etc.) bestimmbar. Anhand der Koordinatenangaben oder Ortsangaben der relativen, geographischen Lage von Sender 10 und Empfänger 11 wird z.B. mittels einer Verrechnungseinheit 30 die Luftdistanz zwischen Sender 10 und Empfänger 11 bestimmt. Die Luftdistanz kann z.B. auf einem Datenträger der Verrechnungseinheit 30 abgespeichert werden. Die Verrechnungseinheit 30 ermittelt 3010 basierend auf einem aus bekannten Daten 5000 von Netzwerkverbindungen selektierten Datensample 4010 ein oder mehrere Distanzfaktoren 2011. Der Ablauf eines erfindungsgemässen Verfahrens wird in Figur 9 schematisch dargestellt, worauf sich auch die vierstelligen Referenznummern beziehen. Die Daten 5000 können z.B. experimentell ermittelte Daten oder anderweitig bekannte Daten von Netzwerkverbindungen sein, die die Luftdistanz und die effektive, physikalische Leitungslänge dieser Netzwerkverbindungen umfassen. Die Distanzfaktoren 2011 werden somit in Abhängigkeit einer Wahrscheinlichkeit ermittelt, wobei die Wahrscheinlichkeit bestimmbar sein kann, und beschreiben die effektive Netzwerkverbindungslänge $D_e$ in Abhängigkeit der Luftdistanz $D_a$. Weiter können die Distanzfaktoren 2011 der bestimmbaren Wahrscheinlichkeit zugeordnet auf einen Datenträger der Verrechnungseinheit 30 übertragen werden. Als Distanzfaktoren 2011 kann ein Steigungsfaktor und eine Abszisse mittels der Verrechnungseinheit 30 ermittelt werden, wobei eine lineare Abhängigkeit zwischen Luftdistanz $D_a$ und effektive Netzwerkverbindungslänge $D_e$ bestimmt wird. Beispielsweise ist es aber auch möglich, mittels der Verrechnungseinheit 30 die Distanzfaktoren 2011 als Parameter eines Polynoms vom 2. Grade oder höher zu bestimmen. Die bestimmbare Wahrscheinlichkeit, welche mittels eines Sicherheitsfaktor 2012 festgelegt werden kann, gibt an, ob eine ermittelte Netzwerkverbindungslänge kürzer oder länger als ihre effektive Netzwerklänge $D_e$ ist. Die Wahrscheinlichkeit kann mittels des Sicherheitsfaktor beispielsweise zwischen 0.85 und 0.95 gewählt werden. Der Sicherheitsfaktor kann bei der erwähnten Wahrscheinlichkeit im Falle der letzten Meile (siehe weiter unten) z.B. eine Wert zwischen 700 und 800 aufweisen, wobei die Einheit dabei Meter (m) ist.

Figur 5 zeigt ein Beispiel eines Datensamples für ein bestehendes Netzwerk. Das Datensample umfasst 200'000 gemessene Netzwerkverbindung der letzten Meile (siehe weiter unten). In diesem Netzwerk bestehen die Verbindungen hauptsächlich aus traditionellen Telefonverbindungen mit Kupferkabel von 0.4 mm und 0.6 mm Ader-Durchmesser. Das Beispiel zeigt eine klare Korrelation, obwohl die Komplexität solcher Netzwerkstrukturen für den Fachmann eine kompliziertere Abhängigkeit erwarten liesse. Die X-Achse gibt dabei die effektive Netzwerkverbindungslänge $D_e$ in Meter an und die Y-Achse die Luftdistanz der Netzwerkverbindungen $D_a$ ebenfalls in Meter.

Figur 8 zeigt ein Beispiel für eine Bestimmung der ein oder mehreren Distanzfaktoren 2011 sowie des Sicherheitsfaktor 2012. In Analogie zur Figur 5 gibt die X-Achse dabei die-effektive Netzwerkverbindungslänge $D_e$ in Meter an und die Y-Achse die Luftdistanz der Netzwerkverbindungen $D_a$ ebenfalls in Meter. Die Datenpunkte können z.B. aus einem Datensample mit bekannten Daten 5000 von Netzwerkverbindungen ausgewählt worden sein 4010. Die Bestimmung der Distanzfaktoren 2011 sowie des Sicherheitsfaktor 2012 kann beispielsweise mittels eines Fittmoduls geschehen. Bei diesem Beispiel wurde eine lineare Abhängigkeit zwischen Luftdistanz $D_a$ und effektive Netzwerkver-bindungslänge $D_e$ bestimmt, wobei als Distanzfaktoren 2011 ein Steigungsfaktor a und eine Abszisse b mittels der Verrechnungseinheit 30 ermittelt werden. Die Abszisse b ergibt sich durch die unterschiedlichen Anschlussorte (z.B. Stadt, Vorort, Land, Gebirge) als auch durch die unterschiedlichen Anschlussbereiche (z.B. Hauptverteiler, Verteilerkasten, Überführungspunkt e.t.c.). Die effektive Distanz ergibt sich dann aus: $D_e = y = a\,D_a + b$. Für y sind etwa 50% der ermittelten Netzwerkverbindungen kürzer als die effektiven Netzwerkverbindungen, d.h. mit einer Wahrscheinlichkeit von 0.5. Der Sicherheitsfaktor S 2012 wurde ebenfalls linear gewählt, d.h. als Konstante. Damit ergibt sich $D_e = y_s = a\,D_a + b + S$. Mittels S kann die Wahrscheinlichkeit, ob eine ermittelte Netzwerkverbindungslänge kürzer oder länger als ihre effektive Netzwerklänge $D_e$ ist, bestimmt werden. Im gezeigten Beispiel mit $y_s$ von Figur 8 wurde die Wahrscheinlichkeit mittels des Sicherheitsfaktor S 2012 auf 0.9 gesetzt. In dem Ausführungsbeispiel wurde für den Steigungsfaktor $a = D_e / D_a$ für die letzte Meile im traditionellen Telefonnetz beispielsweise für Stadtbedingungen $a_s = 1.27$, Vorortbedingungen $a_v = 1.28$, Landbedingungen $a_l = 1.30$ und Gebirgsbedingungen: $a_g = 130$ gefunden. Mit einem gemischten Datensatz (Stadt, Vorort, Land, Gebirge) wurde ein $a_{all} = 1.30$ ermittelt. In analoger Weise ergibt sich dabei für $b_s = 200$, $b_v = 355$, $b_l = 372$, $b_g = 391$ und $b_{all} = 328$, wobei b in Metern angegeben ist. Die Standardabweichungen σ liegen für das Ausführungsbeispiel bei $σ_s = 333$, $σ_v = 569$, $σ_l = 682$, $σ_g = 527$ und $σ_{all} = 598$. Die Standardabwei-chungen σ gibt die Streuung der Differenzen zwischen effektiver Netzwerkverbindungslänge und ermittelter Netzwerkverbindungslänge wieder. Die mittlere Abweichung in Meter der effektive Netzwerkverbindungslänge $D_e$ von der er-mittelten Netzwerkverbindungslänge $D_a$ ist näherungsweise unabhängig von der Netzwerkverbindungslänge und wird in Figur 6 für das Ausführungsbeispiel dargestellt. Die X-Achse gibt die mittlere Abweichung $\Delta D$ in Meter an und die Y-Achse die Grösse des verwendeten Datensamples, d.h. die Anzahl N bekannter Netzwerkverbindungen. Um eine Wahrscheinlichkeit von 0.9 zu erhalten, ergibt das für dieses Ausführungsbeispiel für den Sicherheitsfaktor S z.B. $S_s = 360$, $S_v = 640$, $S_l = 850$, $S_g = 670$ und $S_{all} = 730$. Um jedoch eine Wahrscheinlichkeit von 0.95 zu erhalten, ergibt das für dieses Ausführungsbeispiel für den Sicherheitsfaktor S $S_s = 490$, $S_v = 1100$, $S_l = 1330$, $S_g = 930$ und $S_{all} = 1210$.

Basierend auf den ein oder mehreren Distanzfaktoren 2011 und dem Sicherheitsfaktors 2012 wird anhand der geographischen Koordinaten des Senders 10 und des Empfängers 11 der zu klassierenden Netzwerkverbindung 12 mittels der Verrechnungseinheit 30 die effektive Netzwerkverbindungslänge, d.h. ihre physikalische Länge, bestimmt 1010 und auf einen Datenträger der Verrechnungseinheit 30 der zu klassierenden Netzwerkverbindung 12 zugeordnet übertragen. Mit der physikalischen Länge ist die effektive Kabellänge, also nicht etwa z.B. die Luftdistanz, zwischen dem Sender 10 und dem Empfänger 11 gemeint. Die Netzwerkverbindung 12 soll aus einem analogen Medium, wie z.B. einer Kupferdrahtverkabelung bestehen. In diesem Ausführungsbeispiel wurden beispielsweise Kupferkabel mit 0.4 oder 0.6 mm Ader-Durchmesser verwendet, wie sie typischerweise auf der letzten Meile des öffentlichen Telefonnetzes (PSTN: Public Switched Telephone Network) zum Einsatz kommen. Die letzte Meile wird in Figur 4 schematisch dargestellt. Die Referenznummer 70 bezeichnet dabei einen Router zu einem Netzwerk, der über z.B. ein 10 BT Ethernet 77 und das öffentliche Telefonnetz (PSTN) 72 mit einem mit einem Modem Terminal Server 71 verbunden ist. Der Modem Terminal Server 71 ein DSL Access Multiplexer (DSLAM) sein. Wie erwähnt ist die Referenznummer 72 das öffentliche Telefonnetz (PSTN), an welches der Modem Terminal Server 71 beispielsweise über ein Glasfaserkabel 78 angeschlossen ist. Weiter ist das öffentliche Telefonnetz 79 rsp. der Modem Terminal Server 71 über typischerweise ein Kupferdrahtkabel 79 und über die Telefonbox 73 mit einem Modem 74 eines Personal Computers (PC) 75 verbunden. Die Referenznummer 79 ist dabei die erwähnte sogenannte "letzte Meile" von der Verteilerstation des Telefonneztbetreibers zum Enduser. Der Enduser 76 kann damit mit seinem PC direkt auf den Router 70 mittels der beschriebenen Verbindung zugreifen. Die gebräuchlichen Telefonkupferleitungen können z.B. aus 2-2400 Paar Kupferdrähten bestehen. Es sind aber auch andere analoge Medien, insbesondere Kupferkabel mit z.B. anderen Aderdurchmessern, vorstellbar. Es muss ausdrücklich darauf hingewiesen werden, dass die Netzwerkverbindungen 12 nicht nur jeweils unterschiedliche Durchmesser bzw. Dicken 114, 142, 143, 144 aufweisen können, sondern dass eine einzelne Netzwerkverbindung aus einer Kombination von Kabeln mit unterschiedlichem Ader-Durchmesser oder Dicken bestehen kann, d.h. dass die Netzwerkverbindung mehrere Teilstücke mit Kabeln unterschiedlicher Adern-Dicke umfasst.

Besteht das Netzwerk aus einer Kombination von Kabeln mit unterschiedlichem Ader-Durchmesser oder Dikken, wird mindestens ein Dämpfungsverteilungsfaktor 2020 basierend auf einem aus bekannten Daten 5000 von Netzwerkverbindungen selektierten Datensample 4020 bestimmt 3020 und auf einen Datenträger der Verrechnungseinheit 30 übertragen, wobei der mindestens eine Dämpfungsverteilungsfaktor 2020 das Verhältnis der Dämpfungen unterschiedlicher Verbindungsteilstücken einer Netzwerkverbindung zueinander angibt. Der Dämpfungsverteilungsfaktor 2020 kann als linearer Faktor bestimmt werden. Der mindestens eine Dämpfungsverteilungsfaktor 2020 kann aber auch eine nicht lineare Abhängigkeit umfassen, falls dies notwendig ist. In diesem Ausführungsbeispiel umfassen die Netzwerkverbindungen 0.4 mm und 0.6 mm Aderndurchmesser des Kupferdrahtkabel, wie sie auf der letzten Meile üblich sind. Da nur zwei Typen von Kabeln verwendet wird, reicht die Bestimmung eines Dämpfungsverteilungsfaktor 2020. Die Verbindungskabel weisen gemäss ihrem unterschiedlichen Durchmesser unterschiedliche elektrische Eigenschaften und unterschiedliche Dämpfungen auf. Es ist deshalb für das Verfahren wichtig, dass mindestens das Verhältnis der Anteile an Kupferkabel mit 0.4 mm Aderndurchmesser und Kupferkabel mit 0.6 mm Aderndurchmesser einer Netzwerkverbindung innerhalb der benötigten Genauigkeit bekannt ist. Das öffentliche Telefonnetz ist üblicherweise so konstruiert, dass die totale DC Impedanz (DC: Direct Current (Gleichstrom)) innerhalb eines bestimmten Bereiches liegt. Diese Eigenschaft wird dazu benutzt, um zu bestimmen, wann der Benutzer den Telefonhörer abhebt, um einen Telefonanruf zu tätigen. Wird ein Telefon benutzt, d.h. hebt ein Benutzer z.B. den Hörer ab, ändert das Telefon seine Impedanz, welche Änderung von der Zentrale detektiert wird. Deshalb wird im allgemeinen für lange Leitungslinien mehr 0.6 mm Kabel (da der Widerstand $\Omega$ kleiner ist) und für kurze Distanzen mehr 0.4 mm Kabel verwendet. Damit kann das Verhältnis der Kabeladerdicken phänomenologisch angenähert werden. Insbesondere kann auch die Verrechnungseinheit 30 mittels eines Fittmoduls basierend auf bekannten Daten 5000 von Netzwerkverbindungen die Funktion des Dämpfungsverteilungsfaktor in Abhängigkeit der Verbindungslänge bestimmen 2020. In diesem Ausführungsbeispiel wurde ein linearer Faktor als Dämpfungsverteilungsfaktor 2020 benutzt mit

$D_e \leq 10$:

$$L_{0.4}(D_e) = \frac{(10 - l)}{10} \cdot D_e$$

$$L_{0.6}(D_e) = \frac{D_e^{\,2}}{10}$$

$D_e > 10$ :

$$L_{0.4}(D_e) = 0$$

$$L_{0.6}(D_e) = D_e$$

wobei $L_{0.4}$ den Anteil an 0.4 mm Kabel in km und $L_{0.6}$ den Anteil an 0.6 mm Kabel ebenfalls in km als Funktion von $D_e$ ($D_e$: effektiven Länge der Netzwerkverbindung), angibt. Figur 7 zeigt die Abhängigkeit $R_t$ schematisch mit $t_1$ als Kabelanteil mit 0.4 mm Aderndurchmesser und $t_2$ als Kabelanteil mit 0.6 mm Aderndurchmesser. Die X-Achse gibt die effektive Netzwerkverbindungslänge $D_e$, d.h. ihre physikalische Länge an, und die Y-Achse die Anteile $R_t$ eines jeweiligen Kabeltypen in Prozent. Wie man sieht, steigt der Anteil an 0.6 mm Ader-Kupferkabel für Distanzen D über 10 km auf 100 %, d.h. dass die Netzwerkverbindung fast ausschliesslich aus 0.6 mm Kupferkabel besteht. Basierend auf der Funktion des Dämpfungsverteilungsfaktor in Abhängigkeit der Verbindungslänge 2020 und der effektive Netzwerkverbindungslänge wird der Dämpfungsverteilungsfaktor für die zu klassierende Netzwerkverbindung bestimmt 1020 und auf einen Datenträger der Verrechnungseinheit 30 der zu klassierenden Netzwerkverbindung 12 zugeordnet übertragen.

In einem weiteren Schritt werden Datentransfermargins 2030 zur Bestimmung maximaler Datendurchsatzraten für verschiedene Modemtypen ermittelt 1030 und einer physikalischen Länge 13 und Kabeldicke 141, 142, 143, 144 einer Netzwerkverbindung 12 zugeordnet auf einem Datenträger der Verrechnungseinheit 30 abspeichert. Dazu wird ein Leistungsspektrum $PSD_{Modern}(f)$ in Abhängigkeit der Übertragungsfrequenz $f$ für mögliche Modemtypen 101, 102, 103, 104 mittels Leistungsmessvorrichtung 20 gemessen und auf einen Datenträger einer Verrechnungseinheit 30 übertragen. Das Leistungsspektrum wird auch als die Power Spectral Density (PSD) bezeichnet und gibt für eine bestimmte Bandbreite eines kontinuierlichen Frequenzspektrums, die totale Energie der bestimmten Frequenzbandbreite dividiert durch die bestimmte Bandbreite wieder. Die Division durch die Bandbreite entspricht einer Normierung. Die PSD ist somit eine Funktion in Abhängigkeit der Frequenz $f$ und wird normalerweise in Watt pro Hertz anzugeben. Zur Leistungsmessung mittels Leistungsmessvorrichtung 20 beim Empfänger 11 kann z.B. ein einfacher A/D-Konvertor verwendet werden, wobei die Spannung über einen Widerstand angelegt wird. Zur Modulation von digitalen Signalen auf die Leitung 12 z.B. von Enduser zur Verteilerstation des Telefonnetzbetreibers und umgekehrt, können verschiedenste Modemtypen verwendet werden. Im Stand der Technik sind z.B. die xDSL-Technologien (Digital Subscriber Line) bekannt, deren zwei Hauptvertreter ADSL (Asymmetric Digital Subscriber Line) und SDSL (Symmetric Digital Subscriber Line) sind. Weitere Vertreter der xDSL-Technologie sind HDSL (High-data-rate DSL) und VDSL (Very high speed Digital Subscriber Line). Die xDSL-Technologien sind hochentwickelte Modulationsschemata, um Daten auf Kupferleitungen oder andere analoge Medien zu modulieren. xDSL-Technologien werden manchmal auch als "Letzte-Meile-Technologie" bezeichnet, eben weil sie üblicherweise dazu dienen, die letzte Telefonnetzverteilerstation mit dem Endbenutzer im Büro oder zu Hause zu verbinden und nicht zwischen den einzelnen Telefonnetzverteilerstation verwendet werden. xDSL ist insofern ähnlich zu ISDN (Integrated Services Digital Network), als dass es über die existierenden Kupferleitungen operieren kann und beide eine relativ kurze Distanz zur nächsten Verteilerstation des Telefonnetzbetreibers benötigen. xDSL bietet jedoch viel höhere Übertragungsraten als ISDN. xDSL erreicht Datenübertragungsraten bis 32 Mbps (bps: bits per second) Downstreamrate (Übertragungsrate bei Empfangen von Daten, d.h. bei der Modulation) und von 32 kbps bis 6 Mbps Upstreamrate (Übertragungsrate beim Senden von Daten, d.h. bei der Demudulation), während ISDN pro Kanal Datenübertragungsraten von 64kbps unterstützt. ADSL ist eine in letzter Zeit sehr populär gewordene Technologie, zum Modulieren von Daten über Kupferleitungen. ADSL unterstützt Datenübertragungsraten von 0 bis 9 Mbps Downstreamrate und 0 bis 800 kbps Upstreamrate. ADSL heisst asymmetrisches DSL, da es unterschiedliche Downstream- und Upstreamraten unterstützt. SDSL oder symmetrisches DSL heisst im Gegensatz dazu symmetrisch, weil es die gleichen Downstream- und Upstreamraten unterstützt. SDSL erlaubt das Übertragen von Daten bis zu 2.3 Mbps. ADSL sendet digitale Impulse in einem hochfrequenten Bereich der Kupferkabel. Da diese hohen Frequenzen bei der normalen Tonübertragung im Hörbereich (z.B. Stimmen) nicht benutzt werden, kann ADSL z.B. gleichzeitig zur Übertragung von Telefongesprächen über das gleiche Kupferkabel arbeiten. ADSL ist in Nordamerika weit verbreitet, während SDSL vor allem in Europa entwickelt wurde. ADSL wie SDSL benötigen speziell dafür ausgerüstete Modems. HDSL ist ein Vertreter für symmetrische DSL (SDSL). Der Standard für symmetrisches HDSL (SDSL) ist zur Zeit G.SHDSL, bekannt als G.991.2, wie er als internationaler Standard vom CCITT (Comité Consulatif International Téléphonique et Télégraphique) der ITU (International Telecommunication Union) entwickelt wurde. G.991.2 unterstützt das Empfangen und Senden von symmetrischen Datastreams über ein einfaches Paar Kupferdrähte mit Transferraten zwischen 192 kbps und 2.31 Mbps. G.991.2 wurde so entwickelt, dass es Eigenschaften von ADSL und SDSL umfasst und Standard protokolle wie das IP (Internet Protocol), insbesondere die aktuellen Versionen IPv4 und IPv6 oder IPng des IETF (Internet Engineering Task Force) sowie TCP/IP (Transport Control Protocol), ATM (Asynchronous Transfer Mode), T1, E1 und ISDN unterstützt. Als letzte der xDSL-Technologien ist hier VDSL (Very high speed Digital Subscriber Line) zu erwähnen. VDSL übermittelt Daten in Bereich von 13-55 Mbps über kurze Distanzen (gewöhnlich zwischen 300-1500m) via Twisted-Pair Kupferkabel. Bei VDSL gilt, je kürzer die Distanz, desto höher die Übertragungsrate. Als Schlussstück eines Netzwerkes verbindet VDSL das Büro oder das Haus eines Benutzers mit einer benachbarten optischen Netzwerkeinheit, genannte Optical Network Unit (ONU), welche typischerweise mit dem Hauptglasfasernetzwerk (Backbone) beispielsweise einer Firma verbunden ist. VDSL erlaubt dem Benutzer einen Zugriff auf das Netzwerk mit maximaler Bandbreite über die normalen Telefonleitungen. Der VDSL Standard ist noch nicht vollständig festgelegt. So gibt es VDSL-Technologien, die ein Line Coding Schema basierend auf DMT (Discrete Multitone) besitzen, wobei DMT ein Multi-Carrier System ist, welches eine grosse Ähnlichkeit zur ADSL-Technologie hat. Andere VDSL-Technologien haben ein Line-Coding Schema basieren auf Quadature Amplitude Modulation (QAM), das im Gegensatz zum DMT billiger ist und weniger Energie benötigt. Für dieses Ausführungsbeispiel können die Modemtypen ADSL- und/oder SDSL- und/oder HDSL- und/oder und/oder VDSL-Modemtypen (101, 102, 103, 104) umfassen. Insbesondere können die möglichen SDSL-Modemtypen (101, 102, 103, 104) mindestens einen G.991.2-Modemtypen und/oder die ADSL-Modemtypen (101, 102, 103, 104) mindestens einen G.992.2-Modemtypen umfassen. Es ist aber klar, dass diese Aufzählung in keiner Weise einschränkend auf den Schutzbereich der Erfindung gelten soll, sondern im Gegenteil sind andere Modemtypen vorstellbar.

Mit der Verrechnungseinheit 30 wird die Dämpfung H für verschiedene physikalische Längen 13 und Aderdicken der Kabels 141, 142, 143,144, wie z.B. 0.4 mm und 0.6 mm, einer Netzwerkverbindung 12 bestimmt und die effektiven Signalstärken S($f$) beim Empfänger 11 basierend auf der Dämpfung H($f$) sowie dem Leistungsspektrum PSD($f$) den jeweiligen physikalischen Längen L 13 und Kabeladerdicken D 141, 142, 143, 144 zugeordnet in einer ersten Liste auf einem Datenträger der Verrechungseinheit 30 abgespeichert. Die Dämpfung H(f,L,D) ist dabei wie die effektive Signalstärke S($f$) eine Funktion in Abhängigkeit der Frequenz f. Das vom Sender 10 gesendete Signal ist somit $PSD_{Modem}$($f$). während beim Empfänger noch eine effektive Signalstärke S(f) = $PSD_{Modem}$($f$)$H^2$($f$,L,D) erhalten wird. In einer zweite Liste wird der Rauschlevel N($f$) 40 den jeweiligen physikalischen Längen 13 und Kabeladerdicken 141, 142, 143, 144 der Netzwerkverbindung 12 zugeordnet auf einem Datenträger der Verrechnungseinheit 30 abgespeichert, wobei der Rauschlevel N($f$) 40 mittels der Verrechnungseinheit 30 in Abhängigkeit mindestens von Crosstalkparameter Xtalktype und Anzahl Störquellen A basierend auf dem Leistungsspektrum PSD bestimmt wird. D.h.

$$N(f) = \sum_{i,\,Xtalktype} PSD_{SModem(i)}(f) Hxp(f, L, Xtalktype, A_i)$$

Die Summe geht mit dem Index i über alle Störmodulationen (SModem) in Abhängigkeit ihres Xtalktypes, die auf parallelen Verbindungen der Netzwerkverbindung agieren. $PSD_{SModem(i)}$ ist das Leistungsspektrum des i-ten SModems. Hxp ist die Dämpfung in Abhängigkeit des Crosstalk. Wie erwähnt ist die Crosstalkproblematik das physikalische Phänomen, das bei der Modulation von Daten über ein Kupferkabel auftritt. Benachbarte Kupferkabeldrähte innerhalb eines Kupferkabels erhalten über elektromagnetische Wechselwirkung paarweise Teilsignale, die von Modems erzeugt werden. Dies führt dazu, dass xDSL-Modems, die auf benachbarten Drähten übertragen werden, sich gegenseitig stören. Crosstalk als physikalischer Effekt ist beinahe vernachlässigbar für ISDN (Frequenzbereich bis 120 kHz), wird aber wichtig für z.B. ADSL (Frequenzbereich bis 1 MHz) und ein entscheidender Faktor für VDSL (Frequenzbereich bis 12 MHz). Wie beschrieben bestehen die gebräuchlichen Telefonkupferleitungen aus 2 bis 2400 Kupferdrähten. Um beispielsweise vier Paare benutzen zu können, wird der Datenstrom beim Transmitter in mehrfachparallele Datenströme unterteilt und beim Empfänger wieder rekombiniert, was den effektiven Datendurchsatz um einen Faktor 4 erhöht. Dies würde eine Datenübertragung mit bis zu 100Mbps erlauben. Zusätzlich können im Falle von 4 Paar Kupferdrähten die gleichen vier Paar Drähte dazu benutzt werden, die gleiche Datenmenge gleichzeitig in der umgekehrten Richtung zu transportieren. Die bidirektionale Datenübertragung über jedes Paar Kupferdraht verdoppelt die Informationskapazität, die übermittelt werden kann. Dies verachtfacht in diesem Fall die Datenübertragungsrate gegenüber konventionellen Übertragungen, bei welchen für jeweils eine Richtung zwei Paare benutzt werden. Für die Datenübertragung, wie oben beschrieben, ist das Crosstalkrauschen ein stark limitierender Faktor. Man unterscheidet als Crosstalkarten (Xtalktype) zwischen Near-End Crosstalk (Next) 51, welches das ungewollte Signalkoppeln vom Signalen 50 des Senders (Transmitter) 10 am einen Ende zu den Signalen 50 beim Empfänger (Receiver) 10 am gleichen Ende beschreibt, und Far-End Crosstalk (FEXT) 52, welches das ungewollte Signalkoppeln von Signalen 50 bei der Übertragung zum Empfänger 11 am anderen Ende beschreibt, wobei die Signale 50 bei der Übertragung an Signale 50 von benachbarten Kupferpaardrähten koppelt und beim Empfänger 11 als Rauschen (Noise) erscheint (siehe Figur 1). Normalerweise wird davon ausgegangen, dass NEXT 51 nur eine Near-End Störquelle besitzt. Xtalktype ist somit abhängig vom Ort und dem Stream (up/down), d.h. Xtalktype(Stream, Ort). Gibt es mehr als zwei Kupferdrähte, was üblicherweise der Fall ist (typischerweise sind es zwischen 2 und 2400 Drähte), dann stimmt das obenbeschriebene paarweise koppeln nicht mehr. Z.B. für den Fall, dass vier Paar Drähte gleichzeitig benutzt werden, gibt es jetzt folglich drei ungewollte Störquellen, die mit ihrer Energie an das Signal 50 koppeln. Für A gilt in diesem Fall A=3. Das gleiche gilt für FEXT-Crosstalk 52.

Die Verrechnungseinheit 30 bestimmt die Datentransfermargins mittels eines Gausstransformationsmodul 31 basierend auf den effektiven Signalstärken S($f$) der ersten und den entsprechenden Rauschlevel R($f$) der zweiten Liste für verschiedene Datenübertragungsmodulationen und/oder Modulationscodierungen für eine vordefinierte Bitrate und speichert die Datentransfermargins den jeweiligen physikalischen Längen 13 und Kabeladerdicken 141, 142, 143, 144 der Netzwerkverbindung 12 zugeordnet auf einem Datenträger der Verrechnungseinheit 30 ab. Mit den effektiven Signalstärken S($f$) der ersten Liste und den Rauschlevels N($f$) lässt sich mittels der Verrechnungseinheit 30 das Signal S zu Rausch R Verhältnis SNR (Signal to Noise Ratio) bestimmen, wobei:

$$SNR \cong \exp\left(T\int_{-1/2T}^{1/2T} \ln\left(\frac{\sum_n |S(f+n/T)|^2}{\sum_n N(f+n/T)}\right) df\right)$$

Dieser Ausdruck gilt nur für CAP, 2B1Q und PAM-Modulation, nicht aber für DMT-Modulation. DMT wird weiter unten näher beschrieben. T ist dabei der Symbolintervall oder das Halbe der Inversen der Nyquist-Frequenz. Die Nyquist-Frequenz ist die höchst mögliche Frequenz, die noch genau abgetastet (gesampled) werden kann. Die Nyquist-Frequenz ist die halbe Abtastfrequenz (Sampling Frequenz), da ungewollte Frequenzen erzeugt werden, wenn ein Signal abgetastet wird, dessen Frequenz höher als die halbe Abtastfrequenz ist. n ist der Summierungsindex. In der Praxis reicht es normalerweise, dass n von -1 bis 1 läuft. Falls das nicht genügt, können weitere Maxima 0, $\pm 1/T$, $\pm 2/T$ etc. dazu genommen werden, bis die gewünschte Genauigkeit erreicht ist. Die Datentranstransfermargins hängen von den Datenübertragungsmodulationen und/oder Modulationscodierungen ab, wie weiter oben erwähnt wurde. In diesem Ausführungsbeispiel werden wir die Abhängigkeit beispielsweise für HDSL-Modems 2B1Q-Modulation (2 Binary, 1 Quarterary) und CAP-Modulation (Carrierless Amplitude/Phase Modulation) als Beispiel für ADSL DMT-Modulation (Discrete Multitone Technology) zeigen und bezüglich der Modulationscodierungen für Trellis-kodierte Signale. Es ist aber auch klar, dass das erfindungsgemässe Verfahren und System ohne weiteres auch für andere Datenübertragungsmodulationen und/oder Modulationscodierungen wie z.B. PAM (Pulse Amplitute Modulation) etc. gilt. Sowohl 2B1Q-Modulation als auch CAP-Modulation wird bei HDSL-Modems verwendet und besitzt eine vordefinierte Bitrate. DMT-Modulation wird bei ADSL-Modems eingesetzt und besitzt dagegen eine variable Bitrate. CAP und DMT benutzten die gleiche fundamentale Modulationstechnologie: QAM (Quadrature Amplitude Modulation), obwohl diese Technologie unterschiedlich eingesetzt wird. QAM ermöglicht es, dass zwei digitale Trägersignale (Carrier Signal) dieselbe Übertragungsbandbreite besetzen. Dabei werden zwei unabhängige sog. Message-Signale verwendet, um zwei Trägersignale zu modulieren, die eine identische Frequenz haben, aber sich in Amplitude und Phase unterscheiden. QAM-Empfänger können unterscheiden, ob eine kleine oder eine hohe Anzahl Amplituden- und Phasenzustände benötigt werden, um Rauschen (Noise) und Interference z.B. auf einem Kupferdrahtpaar zu umgehen. 2B1Q-Modulation ist auch bekannt als "4 Level Pulse Amplituden Modulation" (PAM). Sie benutzt zwei Voltniveaus für den Signalpulse und nicht wie z.B. AMI (Alternate Mark Insertion) ein Niveau. Indem positive und negative Niveau-Unterscheidung dazugenommen wird, erhält man ein 4 Niveau-Signal. Die Bits werden schliesslich zu je zweien zusammengefasst, welche Paare je einem Voltniveau entsprechen (deshalb 2 Bit). Damit wird die notwendige Signalfrequenz zum Senden der gleichen Bitrate wie beim bipolaren AMI beim 2B1Q halbiert. Bei HDSL-Modem mit 2B1Q- oder CAP-Modulation existiert folgende Abhängigkeit der Datentransfermargins von der SNR:

$$M_c = \frac{SNR}{\xi}$$

wobei $\xi$ in Abhängigkeit der Fehlerrate (Symbol Error Rate) $\varepsilon_s$ bestimmt werden kann. Für LAN (IP) genügt gewöhnlich eine Fehlerrate von $\varepsilon_s = 10^{-7}$, d.h. jedes $10^7$ Bit wird im Mittel falsch übermittelt. Firmen verlangen typischerweise ein $\varepsilon_s = 10^{-12}$ für ihre Firmennetze. Kommt das $\varepsilon_s$ z.B. in die Grössenordnung der übertragenen Datenpaketgrösse (z.B. $10^{-3}$), würde das umgekehrt bedeuten, dass jedes Packet im Durchnitt zweimal übermittelt werden muss, bis es richtig ankommt. Für die 2B 1 Q-Modulation gilt für $\varepsilon_s$ beispielsweise:

$$\varepsilon_s = 2\left(1 - \frac{1}{M}\right) \cdot G_c\left(\sqrt{\frac{3*\xi}{M^2 - 1}}\right)$$

für unkodierte Signale und

$$\varepsilon_s = 2\left(1 - \frac{1}{M/2}\right) \cdot G_c\left(\sqrt{\frac{3*\xi*10^{0.4}}{(M/2)^2 - 1}}\right)$$

für trellis-kodierte Signale,

während für die CAP-Modulation gilt:

$$\varepsilon_s = 4\left(1 - \frac{1}{M}\right) \cdot G_c\left(\sqrt{\frac{3\xi}{M^2 - 1}}\right)$$

für unkodierte Signale und

$$\varepsilon_s = 4\left(1 - \frac{1}{M/\sqrt{2}}\right) \cdot G_c\left(\sqrt{\frac{3(\xi 10^{0.4})}{M^2/2 - 1}}\right)$$

für trellis-kodierte Signale.

$G_c$ ist für beide Kodierungen eine komplementäre Gaussfunktion mit:

$$G_c(x) := \int_x^\infty \frac{1}{\sqrt{2\pi}} e^{-x'^2/2} dx'$$

und M ist für die 2B1Q-Modulation die Momentzahl mit M=4 für 2B1 Q, während für die CAP-Modulation M die Konstellationsgrösse MxM ist. T ist wie oben das Symbolintervall oder das Halbe der Inversen der Nyquist-Frequenz. Für ADSL-Modems mit DMT-Modulation ist die Abhängigkeit anders. Wie gesagt besitzt ADSL eine variable Bitrate. Dies zeigt sich ebenfalls in $M_c$. Es gilt:

$$M_c = x_{ref} \frac{2^{\left(\int \log_2\left(1 + \frac{\xi(f)}{x_{ref}\Gamma}\right) df\right)/\Delta f} - 1}{2^{D/\Delta f} - 1}$$

wobei $\xi(f)$ das Signal-zu-Rausch-Verhältnis $S(f)/N(f)$ ist. $x_{ref}$ ist ein Referenzmargin der in diesem Ausführungsbeispiel typischerweise als 6 dB gewählt wurde, d.h. $x_{ref} = 10^{0.6}$. Aber auch andere Werte als Referenzmargins $x_{ref}$ sind vorstellbar. $f$ ist die ganze Frequenzbreite bzw. das ganze Frequenzband, welches für die Übertragung benutzt wird. Die Integration wird über die Frequenz ausgeführt. D ist die Bitrate beispielsweise in b/s (Bits/Sekunden). $\Gamma$ ist ein Korrekturfaktor. In diesem Ausführungsbeispiel liegt $\Gamma$ beispielsweise bei $\Gamma$=9.55. Die Integration wird in diesem Ausführungsbeispiel über die Frequenz $f$ durchgeführt. Analog dazu kann sie aber auch über der Zeit oder einer anderen physikalischen Grösse durchgeführt werden, wobei der Ausdruck oben dann entsprechend angepasst werden muss.

Im allgemeinen stimmen die wie oben erhaltenen Datentransfermargins nicht mit dem Experiment überein. Deshalb bestimmt die Verrechnungseinheit 30 die effektiven Datentransfermargins mittels mindestens eines Korrekturfaktors basierend auf den abgespeicherten Datentransfermargins. Der Korrekturfaktor wurde für dieses Ausführungsbeispiel so gewählt, dass eine genügende Übereinstimmung zwischen den erhaltenen Datentransfermargins und den effektiven Datentransfermargins erreicht wird. Als genügend wurde für hier z.B. +/- 3dB angenommen, wobei auch andere Werte vorstellbar sind. Um diese maximale Abweichung von +/- 3dB zu erhalten, werden zwei Parameter bestimmt. $M_{imp}$ berücksichtigt die gute oder schlechte Implementation eines Modems durch den Hersteller. $M_{imp}$ wurde aufgrund der Tatsache eingeführt, dass gleiche Modems mit vergleichbarer Hardware und gleichen Datenübertragungsmodulationen und/oder Modulationscodierungen jedoch von unterschiedlichen Herstellern bei der Übersetzung des analogen in ein digitales Signal und umgekehrt, unterschiedliche Resultate liefern, was ihre maximale Bitrate oder ihre maximale Reichweite für eine bestimmt Netzwerkverbindung betrifft. Dies muss für die Datentransfermargins korrigiert werden. Als zweiter Parameter wurde $N_{int}$ eingeführt. $N_{int}$ berücksichtigt das Quantisierungsrauschen im Modem (Analog- zu Digitalwandlung), sowie eine mögliche schlechte Anpassung der Equalizer bei der Übertragung. Findet eine Übertragung statt zwischen einem Sender 10 und einem Empfänger 11 passt der Equalizer im Modem die Übertragungsrate den Bedingungen der Netzwerkverbindung wie z.B. der Liniendämpfung, Phasenverzerrung etc. mittels einer Trainingssequenz an, welche zwischen den beiden kommunizierenden Modems hin- und hergeschickt werden.

Eine schlechte Anpassung durch die Equalizer führt zu einer Verzerrung der Resultate und muss korrigiert werden. Für lineare Equalizer kann beispielsweise folgender Ausdruck verwendet werden:

$$SNR_{LinearEq} = \left( T \int_{-1/2T}^{1/2T} \frac{df}{X_s(f)} \right)^{-1}$$

mit

$$X_s(f) = \sum_n \frac{|S_e(f+n/T)|^2}{N_e(f+n/T)} + 1$$

wobei $SNR_{linearEq}$ das Signal zu Rausch Verhältnis, $S_e$ das Signal, das der Equalizer erhält, $N_e$ das Rauschen und $f$ die Frequenz ist. Für einen Decision Feedback Equalizer (DFE) kann beispielsweise folgender Ausdruck verwendet werden:

$$SNR_{DFE} = \exp\left( T \int_{-1/2T}^{1/2T} \ln(X_s(f)) df \right)$$

mit

$$X_s(f) = \sum_n \frac{|S_e(f+n/T)|^2}{N_e(f+n/T)} + 1$$

wobei wieder $SNR_{linearEq}$ das Signal zu Rausch Verhältnis, $S_e$ wie oben das Signal, das der Equalizer erhält, $N_e$ das Rauschen und $f$ die Frequenz ist. Die Verrechnungseinheit 30 kann zur Bestimmung von $SNR_{DFE}$ z.B. folgende Näherung verwenden:

$$SNR_{DFE} \cong \exp\left( T \int_{-1/2T}^{1/2T} \ln\left( \frac{\sum_n |S_e(f+n/T|^2}{\sum_n N_e(f+n/T)} \right) df \right)$$

Damit folgt für die effektiven Datenmargins: $S(f) = PSD_{Modem}(f) H^2(f,L,D)$ wie vorher. Das Rauschen wird wie folgt korrigiert:

$$N(f) = \sum_i PSD_{SModem(i)}(f) \bullet Hxp^2(f,L,D,xtalktype_i,n_i) + N_{int}$$

Die Korrektur kann in der Verrechnungseinheit 30 hardware- oder softwaremässig in einem Modul implementiert sein. Es ist wichtig darauf hinzuweisen, dass mit einem solchen Modul basierend auf der Korrektur $N_{int}$ ein variabler Rauschfaktor eingeführt wird, der beispielsweise Equalizerabstimmung etc. berüchsichtigen kann. Dies kann im Stand der Technik so nicht gefunden werden und gehört u.a. zu den wesentlichen Vorteilen der Erfindung. Die effektiven Datentransfermargins $M_{eff}$ werden durch $M_{eff} = M_c - M_{imp}$, welches zusätzlich zu $N_{int}$ wie oben erwähnt, berücksichtigt wird. Die korrekten Werte für $M_c$ und $N_{int}$ können durch die Verrechnungseinheit 30 im Vergleich mit experimentellen Daten erhalten werden. Typischerweise muss die Verrechnungseinheit 30 dazu Zugriff auf Daten verschiedener Experimente haben, um die Parameter korrekt innerhalb der gewünschten Abweichung bestimmen zu können. Mittels der Korrekturfaktoren, die folglich eine mittlere Abweichung der abgespeicherten Datentransfermargins zu den effektiven Datentransfermargins umfassen, werden wie oben beschrieben die effektiven Datentransfermargins bestimmt und ebenfalls den jeweiligen physikalischen Längen L 13 und Kabeladerdicken D 141, 142, 143,144 der Netzwerkverbindung 12 zugeordnet auf einem Datenträger der Verrechnungseinheit 30 abgespeichert. Es ist darauf hinzuweisen, dass die Korrekturfaktoren nicht unbedingt lineare Faktoren, d.h. Konstante sein müssen, sondern ebenso gut Korrekturfunktionen mit einer nicht linearen Abhängigkeit umfassen können. Damit könnten je nach Anwendung auch kompliziertere Abweichungen der experimentellen Daten berücksichtigt werden. Mittels der abgespeicherten Matrizen mit den Datentransfermargins bestimmt die Verrechnungseinheit 30 schliesslich basierend auf den abgespeicherten effektive Datentransfermargins anhand der bekannten physikalischen Länge 13 der zu bestimmenden Netzwerkverbindung 12 zwischen dem Sender 10 und dem Empfänger 11 den Datentransfermargin für eine bestimmte Netzwerkverbindung 12. Die Datentransfermargins werden wie mehrfach erwähnt in dB angegeben. Für Werte >0 dB läuft das Modem typischerweise, während es für Werte <0 dB nicht läuft. Um einen guten sicheren Betrieb zu garantieren, kann es sinnvoll sein, als untere Grenze z.B. 6 dB zu wählen. Allgemein eignen sich aber auch andere Datentransfermargins als untere Grenze, z.B. Werte zwischen 3 dB und 9 dB. Durch die gleiche Anordnung lässt sich für ADSL-Modem, wie aus den obigen Angaben folgt, anstelle von den $^I$ Matrizen mit den Datentransfermargins entsprechend Matrizen mit Bitraten für verschiedenen Netzwerkverbindungen z.B. für einen Datentransfermargin von 6 dB bestimmen. Damit folgt zur Bestimmung der Matrizen mit Bitraten 6 dB = $M_{eff}$. Bei den HDSL-Modems macht dies insofern keinen Sinn, da bei HDSL die Kodierungen, wie z.B. 2B1Q oder CAP mit einer konstanten Bitrate, hier z.B. 2.048 Mb/s, arbeiten. Der Grund für diesen Unterschied zu den ADSL-Modems liegt darin, dass HDSL-Systeme nur für einen Anschluss mit höherer Bitrate ausgelegt wurden und nur die Sicherheit (SNR) interessiert. Figur 3 zeigt die Übertragungsdistanz der Netzwerkverbindung in Abhängigkeit der Übertragungsrate (Bitrate) für ADSL-Modems. Die Referenznummern 60 und 61 bezeichnen dabei unterschiedliche Rauschumgebungen. Die Bitraten wurden, wie oben beschrieben, basierend auf den gespeicherten Matrizen bzw. Listen 2030 dargestellt.

Anhand gespeicherten Matrizen bzw. Listen 2030 der Datentransfermargins/Bitraten wird der Datentransfermargins/Bitraten für die zu klassierende Netzwerkverbindung bestimmt 1030 und auf einen Datenträger der Verrechnungseinheit 30 der zu klassierenden Netzwerkverbindung 12 zugeordnet übertragen.

Basierend auf der effektiven Netzwerkverbindungslänge, Dämpfungsverteilungsfaktor 2020 und den Datentransfermargins 2030 kann die zu klassierende Netzwerkverbindung mittels Verrechnungseinheit 30 entsprechend ihrer maximalen Datendurchsatzrate klassiert werden 1040. Die Klassierung kann insbesondere die maximal mögliche Datenübertragungsrate für die zu klassierende Netzwerkverbindung umfassen. Die Resultate der Klassierung könne über ein Bildschirm, ein Druckermodul oder eine sonstige Ausgabeeinheit einem Benutzer zugänglich gemacht werden 1050. Insbesondere kann beispielsweise über die Vorrichtung über ein graphisches Interface mit dem Internet verbunden sein, wobei sich durch einen beliebigen Telefonabonnenten eines Telefonnetzdienstanbieters einfach bestimmen lässt, ob sein Anschluss (z.B. zu Hause) sich für eine spezifische Netzwerkanbindung eignet oder nicht.

**Patentansprüche**

1. Verfahren zum Klassifizieren von Netzwerkverbindungen, wobei geographische Koordinaten eines Senders (10) und eines Empfängers (11) einer zu klassierenden Netzwerkverbindung (12) bekannt sind, **dadurch gekennzeichnet,**

   **dass** basierend auf bekannten Daten (5000) von Netzwerkverbindungen mittels einer Verrechnungseinheit (30) ein oder mehrere Distanzfaktoren (2011) ermittelt werden (3010) und einer bestimmbaren Wahrscheinlichkeit zugeordnet auf einen Datenträger der Verrechnungseinheit (30) übertragen werden, wobei die Distanzfaktoren (2011) die effektive Netzwerkverbindungslänge in Abhängigkeit der Luftdistanz angegeben und wobei die bestimmbare Wahrscheinlichkeit, ob eine ermittelte Netzwerkverbindungslänge kürzer oder länger als ihre effektive Netzwerklänge ist, mittels eines Sicherheitsfaktor (2012) festgelegt wird,

   **dass** basierend auf den ein oder mehreren Distanzfaktoren (2010), dem Sicherheitsfaktor (2012) und den geographischen Koordinaten des Senders (10) und des Empfängers (11) der zu klassierenden Netzwerkverbindung (12) mittels der Verrechnungseinheit (30) die effektive Netzwerkverbindungslänge bestimmt wird (1010) und auf einen Datenträger der Verrechnungseinheit (30) der zu klassierenden Netzwerkverbindung (12) zugeordnet übertragen wird,

   **dass** mindestens ein Dämpfungsverteilungsfaktor (2020) basierend auf bekannten Daten (5000) von Netzwerkverbindungen bestimmt wird (3020) und auf einen Datenträger der Verrechnungseinheit (30) übertragen wird, wobei der mindestens eine Dämpfungsverteilungsfaktor (2020) das Verhältnis der Dämpfungen unterschiedlicher Verbindungsteilstücken einer Netzwerkverbindung zueinander angibt,

   **dass** Datentransfermargins (2030) zur Bestimmung maximaler Datendurchsatzraten für verschiedene Modemtypen ermittelt (3030) und einer physikalischen Länge (13) und Kabeldicke (141, 142, 143, 144) einer Netzwerkverbindung (12) zugeordnet auf einem Datenträger der Verrechnungseinheit (30) abspeichert werden, wobei mittels einer Leistungsmessvorrichtung (20) Leistungsspektren für die Modemtypen gemessen werden, mittels Verrechnungseinheit (30) basierend auf den Leistungsspektren effektive Signalstärken und entsprechende Rauschlevel bestimmt werden und mittels Gausstransformationsmoduls (31) basierend auf den Signalstärken und den Rauschlevels für verschiedene Datenübertragungsmodulationen und/oder Modulationscodierungen die Datentransfermargins (2030) für eine vordefinierte Bitrate bestimmt werden,

und **dass** basierend auf der effektiven Netzwerkverbindungslänge, Dämpfungsverteilungsfaktor (2020) und den Datentransfermargins (2030) die zu klassierende Netzwerkverbindung mittels Verrechnungseinheit (30) entsprechend ihrer maximalen Datendurchsatzrate klassiert wird (1040).

2. Verfahren nach Anspruch 1, **dadurch gekennzeichnet, dass** als Distanzfaktoren (2011) ein Steigungsfaktor und eine Abszisse mittels der Verrechnungseinheit (30) ermittelt werden, wobei eine lineare Abhängigkeit zwischen Luftdistanz und effektive Netzwerkverbindungslänge bestimmt wird

3. Verfahren nach Anspruch 1, **dadurch gekennzeichnet, dass** mittels der Verrechnungseinheit (30) die Distanzfaktoren (2011) als Parameter eines Polynoms von mindestens 2. Grades bestimmt werden.

4. Verfahren nach einem der Ansprüche 1 bis 3, **dadurch gekennzeichnet, dass** mittels des Sicherheitsfaktor (2012) eine Wahrscheinlichkeit zwischen 0.85 und 0.95 gewählt wird.

5. Verfahren nach einem der Ansprüche 1 bis 4, **dadurch gekennzeichnet, dass** der Sicherheitsfaktor (2012) eine Wert zwischen 700 und 800 aufweist.

6. Verfahren nach einem der Ansprüche 1 bis 5, **dadurch gekennzeichnet, dass** mittels eines Dämpfungsverteilungsfaktor (2020) eine lineare Abhängigkeit der Dämpfungen zueinander bestimmt wird.

7. Verfahren nach einem der Ansprüche 1 bis 6, **dadurch gekennzeichnet, dass** die Verrechnungseinheit (30) korrigierte Datentransfermargins mittels mindestens eines Korrekturfaktors basierend auf den abgespeicherten Datentransfermargins (2030) bestimmt und den jeweiligen physikalischen Längen (13) und Kabeladerdicken (141, 142, 143, 144) der Netzwerkverbindung (12) zugeordnet auf einem Datenträger der Verrechnungseinheit (30) abspeichert wird, wobei der mindestens eine Korrekturfaktor eine mittlere Abweichung der abgespeicherten Datentransfermargins zu den effektiven Datentransfermargins und/oder ein Equalizerfaktor zur Korrektur der Equalizerabstimmung umfasst.

8. Verfahren nach Anspruch 7, **dadurch gekennzeichnet, dass** der Korrekturfaktor eine nichtlineare Abhängigkeit bezüglich der physikalischen Längen (13) und/oder Kabeladerdicken (141, 142, 143, 144) wiedergibt.

9. Verfahren nach einem der Ansprüche 1 bis 8, **dadurch gekennzeichnet, dass** die Rauschlevel mittels Verrechnungseinheit (30) in Abhängigkeit mindestens von Crosstalkparameter und Anzahl Störquellen basierend auf den Leistungsspektren bestimmt werden.

10. Verfahren nach einem der Ansprüche 1 bis 9, **dadurch gekennzeichnet, dass** das Leistungsspektrum in Abhängigkeit der Übertragungsfrequenz für ADSL- und/oder SDSL- und/oder HDSL- und/oder und/oder VDSL-Modemtypen (101, 102, 103, 104) gemessen wird.

11. Verfahren nach Anspruch 10, **dadurch gekennzeichnet, dass** die möglichen SDSL-Modemtypen (101, 102, 103, 104) mindestens einen G.991.2-Modemtypen und/oder die ADSL-Modemtypen (101, 102, 103, 104) mindestens einen G.992.2-Modemtypen umfassen.

12. Verfahren nach einem der Ansprüche 1 bis 11, **dadurch gekennzeichnet, dass** mittels des Gaustransformationsmoduls (31) die Datentransfermargins für mindestens die Datenübertragungsmodulationen 2B1Q und/oder CAP und/oder DMT und/oder PAM bestimmt werden.

13. Verfahren nach einem der Ansprüche 1 bis 12, **dadurch gekennzeichnet, dass** mittels des Gaustransformationsmoduls (31) die Datentransfermargins für mindestens die Trellis-Modulationscodierung bestimmt werden.

14. Verfahren zum Klassifizieren von Netzwerkverbindungen, wobei geographische Koordinaten eines Senders (10) und eines Empfängers (11) einer zu klassierenden Netzwerkverbindung (12) bekannt sind, **dadurch gekennzeich-**

**net,**

    **dass** basierend auf bekannten Daten (5000) von Netzwerkverbindungen mittels einer Verrechnungseinheit (30) ein oder mehrere Distanzfaktoren (2011) ermittelt werden (3010) und einer bestimmbaren Wahrscheinlichkeit zugeordnet auf einen Datenträger der Verrechnungseinheit (30) übertragen werden, wobei die Distanzfaktoren (2011) die effektive Netzwerkverbindungslänge in Abhängigkeit der Luftdistanz angeben und wobei die bestimmbare Wahrscheinlichkeit, ob eine ermittelte Netzwerkverbindungslänge kürzer oder länger als ihre effektive Netzwerklänge ist, mittels eines Sicherheitsfaktors (2012) festgelegt wird,

    **dass** basierend auf den Distanzfaktoren (2010), dem Sicherheitsfaktors (2012) und den geographischen Koordinaten des Senders (10) und des Empfängers (11 ) der zu klassierenden Netzwerkverbindung (12) mittels der Verrechnungseinheit (30) die effektive Netzwerkverbindungslänge bestimmt wird (1010) und auf einen Datenträger der Verrechnungseinheit (30) der zu klassierenden Netzwerkverbindung (12) zugeordnet übertragen wird,

    **dass** mindestens ein Dämpfungsverteilungsfaktor (2020) basierend auf bekannten Daten (5000) von Netzwerkverbindungen bestimmt wird (3020) und auf einen Datenträger der Verrechnungseinheit (30) übertragen wird, wobei der mindestens eine Dämpfungsverteilungsfaktor (2020) das Verhältnis der Dämpfungen unterschiedlicher Verbindungsteilstücken einer Netzwerkverbindung zueinander angibt,

    **dass** Bitraten (2030) zur Bestimmung maximaler Datendurchsatzraten für verschiedene Modemtypen ermittelt und einer physikalischen Länge (13) und Kabeldicke (141, 142, 143, 144) einer Netzwerkverbindung (12) zugeordnet auf einem Datenträger der Verrechnungseinheit (30) abgespeichert werden, wobei mittels einer Leistungsmessvorrichtung (20) Leistungsspektren für die Modemtypen gemessen werden, mittels Verrechnungseinheit (30) basierend auf den Leistungsspektren effektive Signalstärken und entsprechende Rauschlevel bestimmt werden und mittels Gausstransformationsmoduls (31) basierend auf den Signalstärken und den Rauschlevels für verschiedene Datenübertragungsmodulationen und/oder Modulationscodierungen die Bitraten (2030) für einen vordefinierten Datentransfermargin bestimmt werden,

    und **dass** basierend auf der effektive Netzwerkverbindungslänge, Dämpfungsverteilungsfaktor (2020) und den Datentransfermargins (2030) die zu klassierende Netzwerkverbindung mittels Verrechnungseinheit (30) entsprechend ihrer maximalen Datendurchsatzrate klassiert wird (1040).

**15.** Verfahren nach Anspruch 14, **dadurch gekennzeichnet, dass** als Distanzfaktoren (2011) ein Steigungsfaktor und eine Abszisse mittels der Verrechnungseinheit (30) ermittelt werden, wobei eine lineare Abhängigkeit zwischen Luftdistanz und effektive Netzwerkverbindungslänge bestimmt wird.

**16.** Verfahren nach Anspruch 14, **dadurch gekennzeichnet, dass** mittels der Verrechnungseinheit (30) die Distanzfaktoren (2011) als Parameter eines Polynoms von mindestens 2. Grades bestimmt werden.

**17.** Verfahren nach einem der Ansprüche 14 bis 16, **dadurch gekennzeichnet, dass** mittels des Sicherheitsfaktor (2012) eine Wahrscheinlichkeit zwischen 0.85 und 0.95 gewählt wird.

**18.** Verfahren nach einem der Ansprüche 14 bis 17, **dadurch gekennzeichnet, dass** der Sicherheitsfaktor (2012) eine Wert zwischen 700 und 800 aufweist.

**19.** Verfahren nach einem der Ansprüche 14 bis 18, **dadurch gekennzeichnet, dass** mittels des Gausstransformationsmoduls (31) die Bitraten für einen Datentransfermargin zwischen 3 und 9 dB bestimmt werden.

**20.** Verfahren nach einem der Ansprüche 14 bis 18, **dadurch gekennzeichnet, dass** mittels des Gausstransformationsmoduls (31) die Bitraten für einen Datentransfermargin 6 dB bestimmt werden.

**21.** Verfahren nach einem der Ansprüche 14 bis 20, **dadurch gekennzeichnet, dass** die Verrechnungseinheit (30) korrigierte Bitraten mittels mindestens eines Korrekturfaktors basierend auf den abgespeicherten Bitraten (203) bestimmt und den jeweiligen physikalischen Längen (13) und Kabeladerdicken (141, 142, 143, 144) der Netzwerkverbindung (12) zugeordnet auf einem Datenträger der Verrechnungseinheit (30) abspeichert, wobei der Korrekturfaktor eine mittlere Abweichung der abgespeicherten Bitraten zu den effektiven Bitraten und/oder ein Equalizerfaktor zur Korrektur der Equalizerabstimmung umfasst.

**22.** Verfahren nach Anspruch 21, **dadurch gekennzeichnet, dass** der mindestens eine Korrekturfaktor eine nichtlineare Abhängigkeit bezüglich der physikalischen Längen (13) und/oder Kabeladerdicken (141, 142, 143, 144) wiedergibt.

**23.** Verfahren nach einem der Ansprüche 14 bis 22, **dadurch gekennzeichnet, dass** die Rauschlevel mittels Verrechnungseinheit (30) in Abhängigkeit mindestens von Crosstalkparameter und Anzahl Störquellen basierend auf den Leistungsspektren bestimmt werden.

24. Verfahren nach einem der Ansprüche 14 bis 23, **dadurch gekennzeichnet, dass** das Leistungsspektrum in Abhängigkeit der Übertragungsfrequenz für ADSL- und/oder SDSL- und/oder HDSL- und/oder und/oder VDSL-Modemtypen (101, 102, 103, 104) gemessen wird.

25. Verfahren nach Anspruch 24, **dadurch gekennzeichnet, dass** die möglichen SDSL-Modemtypen (101, 102, 103, 104) mindestens einen G.991.2-Modemtypen und/oder die ADSL-Modemtypen (101, 102, 103, 104) mindestens einen G.992.2-Modemtypen umfassen.

26. Verfahren nach einem der Ansprüche 14 bis 25, **dadurch gekennzeichnet, dass** mittels des Gausstransformationsmoduls (31) die Bitraten für mindestens die Datenübertragungsmodulationen 2B1Q und/oder CAP und/oder DMT und/oder PAM bestimmt werden.

27. Verfahren nach einem der Ansprüche 14 bis 26, **dadurch gekennzeichnet, dass** mittels des Gausstransformationsmoduls (31) die Bitraten für mindestens die Trellis-Modulationscodierung bestimmt werden.

28. Vorrichtung zum Klassifizieren von Netzwerkverbindungen, wobei geographische Koordinaten eines Senders (10) und eines Empfängers (11) einer zu klassierenden Netzwerkverbindung (12) bekannt sind, **dadurch gekennzeichnet,**

   **dass** die Vorrichtung eine Verrechnungseinheit (30) zum Ermitteln und Speichern von ein oder mehreren Distanzfaktoren (2011) einer bestimmbaren Wahrscheinlichkeit basierend auf bekannten Daten (5000) von Netzwerkverbindungen umfasst, wobei die Distanzfaktoren (2011) die effektive Netzwerkverbindungslänge in Abhängigkeit der Luftdistanz angeben und wobei die bestimmbare Wahrscheinlichkeit, ob eine ermittelte Netzwerkverbindungslänge kürzer oder länger als ihre effektive Netzwerklänge ist, mittels eines Sicherheitsfaktors (2012) festgelegt wird,

   **dass** die Verrechnungseinheit (30) Mittel zum Bestimmen und Speichern von mindestens einem Dämpfungsverteilungsfaktor (2020) basierend auf bekannten Daten (5000) von Netzwerkverbindungen umfasst, wobei der mindestens eine Dämpfungsverteilungsfaktor (2020) das Verhältnis der Dämpfungen unterschiedlicher Verbindungsteilstücken einer Netzwerkverbindung zueinander angibt,

   **dass** die Vorrichtung eine Leistungsmessvorrichtung (20) zum Messen von Leistungsspektren für verschiedene Modemtypen, Mittel (30) zum Bestimmen effektiver Signalstärken und entsprechende Rauschlevel basierend auf den Leistungsspektren sowie ein Gausstransformationsmoduls (31) zum Bestimmen und Speichern von Datentransfermargins (2030) basierend auf den Signalstärken und den Rauschlevels für verschiedene Datenübertragungsmodulationen und/oder Modulationscodierungen und für eine vordefinierte Bitrate umfasst.

**Claims**

1. Method for classifying network connections, geographical coordinates of a transmitter (10) and a receiver (11) of a network connection (12) to be classified being known, **characterised**

   **in that**, by means of a calculating unit (30), based on known data (5000) of network connections, one or more distance factors (2011) are determined (3010) and, assigned to a determinable probability, are transmitted to a data carrier of the calculating unit (30), the distance factors (2011) indicating the actual network connection length in dependence upon the air distance, and the determinable probability whether a determined network connection length is shorter or longer than its actual network length is established by means of a safety factor (2012),

   **in that**, based on the one or more distance factors (2010) <sic. (2011)>, the safety factor (2012) and the geographic coordinates of the transmitter (10) and of the receiver (11) of the network connection (12) to be classified, the actual network connection length is determined (1010) by means of the calculating unit (30) and is transmitted, assigned to the network connection (12) to be classified, onto a data carrier of the calculating unit (30),

   **in that** at least one attenuation distribution factor (2020) is determined (3020) based on known data (5000) of network connections and is transmitted onto a data carrier of the calculating unit (30), the at least one attenuation distribution factor (2020) indicating the ratio of attenuation of different partial connection elements of a network connection in relation to one another,

   **in that** data transfer margins (2030) are determined (3030) for determining maximal data throughput rates for different modem types and are stored, assigned to a physical length (13) and cable thickness (141, 142, 143, 144) of a network connection (12), on a data carrier of the calculating unit (30), power spectra for the modem types being measured by means of a power measuring device (20), actual signal strengths and corresponding noise level being determined by means of calculating unit (30) based on the power spectra, and the data transfer margins (2030) for a predefined bit rate being determined by means of Gaussian transformation module (31) based on the signal strengths and the noise level for different data transmission modulations and/or modulation codings,

and **in that**, based on the actual connection length, attenuation distribution factor (2020) and the data transfer margin, the network connection to be classified is classified (1040) corresponding to its maximal data throughput rate by means of calculating unit (30).

2. Method according to claim 1, **characterised in that** a pitch factor and an abscissa are determined as distance factors (2011) by means of the calculating unit (30), a linear dependency between air distance and actual network connection length being determined.

3. Method according to claim 1, **characterised in that** the distance factors (2011) are determined by means of the calculating unit (30) as parameter of a polynomial of at least the $2^{nd}$ order.

4. Method according to one of the claims 1 to 3, **characterised in that** by means of the safety factor (2012) a probability is selected of between 0.85 and 0.95.

5. Method according to one of the claims 1 to 4, **characterised in that** the safety factor (2012) has a value of between 700 and 800.

6. Method according to one of the claims 1 to 5, **characterised in that** by means of an attenuation distribution factor (2020) a linear dependency of the attenuations with respect to one another is determined.

7. Method according to one of the claims 1 to 6, **characterised in that** the calculating unit (30) determines corrected data transfer margins, based on the stored data transfer margins (2030), by means of at least one correction factor, and is stored <sic. stores them>, assigned to the respective physical lengths (13) and cable wire thicknesses (141, 142, 143, 144) of the network connection (12), on a data carrier of the calculating unit (30), the at least one correction factor comprising an average deviation of the stored data transfer margins to the actual data transfer margins and/ or an equaliser factor for correction of the equaliser adjustment.

8. Method according to claim 7, **characterised in that** the correction factor reflects a non-linear dependency with respect to the physical lengths (13) and/or cable wire thicknesses (141, 142, 143, 144).

9. Method according to one of the claims 1 to 8, **characterised in that** the noise level are determined based on the power spectra by means of calculating unit (30) in dependence upon at least crosstalk parameters and number of interference sources.

10. Method according to one of the claims 1 to 9, **characterised in that** the power spectrum is measured in dependence upon the transmission frequency for ADSL and/or SDSL and/or HDSL and/or and/or <sic.> VDSL modem types (101, 102, 103, 104).

11. Method according to claim 10, **characterised in that** the possible SDSL modem types (101, 102, 103, 104) comprise at least one G.991.2 modem type and/or the ADSL modem types (101, 102, 103, 104) comprise at least one G.992.2 modem type.

12. Method according to one of the claims 1 to 11, **characterised in that** by means of the Gaussian transformation module (31) the data transfer margins are determined for at least the data transmission modulations 2B1Q and/ or CAP and/or DMT and/or PAM.

13. Method according to one of the claims 1 to 12, **characterised in that** by means of the Gaussian transformation module (31) the data transfer margins are determined for at least the trellis modulation coding.

14. Method for classifying network connections, geographic coordinates of a transmitter (10) and a receiver (11) of a network connection (12) to be classified being known, **characterised**

**in that**, by means of a calculating unit (30), based on known data (5000) of network connections, one or more distance factors (2011) are determined (3010) and, assigned to a determinable probability, are transmitted onto a data carrier of the calculating unit (30), the distance factors (2011) indicating the actual network connection length in dependence upon the air distance, and the determinable probability whether a determined network connection length is shorter or longer than its actual network length being established by means of a safety factor (2012),

**in that**, based on the distance factors (2010) <sic. (2011)>, the safety factor (2012) and the geographic coordinates of the transmitter (10) and of the receiver (11) of the network connection (12) to be classified, the actual network connection length is determined (1010) by means of the calculating unit (30) and is transmitted, assigned to the network connection (12) to be classified, onto a data carrier of the calculating unit (30),

**in that** at least one attenuation distribution factor (2020) is determined based on known data (5000) of network connections (3020) and is transmitted onto a data carrier of the calculating unit (30), the at least one attenuation distribution factor (2020) indicating the ratio of attenuation of different partial connection elements of a network connection in relation to one another,

**in that** bit rates (2030) are determined for determining maximal data throughput rates for different modem types and, assigned to a physical length (13) and cable thickness (141, 142, 143, 144) of a network connection (12), are stored on a data carrier of the calculating unit (30), power spectra being measured for the modem types by means of a power measuring device (20), actual signal strengths and corresponding noise level being determined by means of calculating unit (30) based on the power spectra, and the bit rates (2030) for a predefined data transfer margin being determined by means of Gaussian transformation module (31) based on the signal strengths and the noise level for different data transmission modulations and/or modulation codings,

and **in that**, based on the actual network connection length, attenuation distribution factor (2020) and the data transfer margins (2030), the network connection to be classified is classified (1040) by means of calculating unit (30) according to its maximal data throughput rate.

15. Method according to claim 14, **characterised in that** a pitch factor and an abscissa are determined as distance factors (2011) by means of the calculating unit (30), a linear dependency between air distance and actual network connection length being determined.

16. Method according to claim 14, **characterised in that** by means of the calculating unit (30) the distance factors (2011) are determined as parameters of a polynomial of at least the $2^{nd}$ order.

17. Method according to one of the claims 14 to 16, **characterised in that** by means of the safety factor (2012) a probability between 0.85 and 0.95 is selected.

18. Method according to one of the claims 14 to 17, **characterised in that** the safety factor (2012) has a value between 700 and 800.

19. Method according to one of the claims 14 to 18, **characterised in that** the bit rates for a data transfer margin between 3 and 9 dB are determined by means of the Gaussian transformation module (31).

20. Method according to one of the claims 14 to 18, **characterised in that** the bit rates for a 6 dB data transfer margin are determined by means of des Gaussian transformation module (31).

21. Method according to one of the claims 14 to 20, **characterised in that** the calculating unit (30) determines corrected bit rates, based on the stored bit rates (203) by means of at least one correction factor and stores them, assigned to the respective physical lengths (13) and cable wire thicknesses (141, 142, 143, 144) of the network connection (12), on a data carrier of the calculating unit (30), the correction factor comprising an average deviation of the stored bit rates with respect to the actual bit rates and/or an equaliser factor for correction of the equaliser adjustment.

22. Method according to claim 21, **characterised in that** the at least one correction factor reflects a non-linear dependency with respect to the physical lengths (13) and/or cable wire thicknesses (141, 142, 143, 144).

23. Method according to one of the claims 14 to 22, **characterised in that** the noise levels are determined based on the power spectra by means of calculating unit (30) in dependence upon at least crosstalk parameters and number of interference sources.

24. Method according to one of the claims 14 to 23, **characterised in that** the power spectrum is measured according to the transmission frequency for ADSL and/or SDSL and/or HDSL and/or and/or <sic.> VDSL modem types (101, 102, 103, 104).

**25.** Method according to claim 24, **characterised in that** the possible SDSL modem types (101, 102, 103, 104) comprise at least one G.991.2 modem type and/or the ADSL modem types (101, 102, 103, 104) comprise at least one G.992.2 modem type.

**26.** Method according to one of the claims 14 to 25, **characterised in that** the bit rates for at least the data transmission modulations 2B1Q and/or CAP and/or DMT and/or PAM are determined by means of the Gaussian transformation module (31).

**27.** Method according to one of the claims 14 to 26, **characterised in that** the bit rates for at least the trellis modulation coding are determined by means of the Gaussian transformation module (31).

**28.** Device for classifying network connections, the geographic coordinates of a transmitter (10) and a receiver (11) of a network connection (12) to be classified being known, **characterised**

**in that** the device comprises a calculating unit (30) for determining and storing one or more distance factors (2011) of a determinable probability based on known data (5000) of network connections, the distance factors (2011) indicating the actual network connection length in dependence upon the air distance, and the determinable probability whether a determined network connection length is shorter or longer than its actual network length being established by means of a safety factor (2012),

**in that** the calculating unit (30) comprises means for determining and storing at least one attenuation distribution factor (2020) based on known data (5000) of network connections, the at least one attenuation distribution factor (2020) indicating the ratio of attenuation of different partial connection elements of a network connection (12) in relation to one another,

**in that** the device comprises a power measuring device (20) for measuring power spectra for different modem types, means (30) for determining actual signal strengths and corresponding noise level based on the power spectra as well as a Gaussian transformation module (31) for determining and storing data transfer margins (2030) based on the signal strengths and the noise levels for different data transmission modulations and/or modulation codings and for a predefined bit rate.

## Revendications

**1.** Procédé pour la classification de liaisons réseaux, des coordonnées géographiques d'un émetteur (10) et d'un récepteur (11) d'une liaison réseau à classifier (12) étant connues, **caractérisé en ce qu'**en

en se basant sur des données connues (5000) de liaisons réseau au moyen d'une unité de calcul (30), un ou plusieurs facteurs de distance (2011) sont déterminés (3010) et sont associés à une probabilité déterminable et sont transmis à un support de données de l'unité de calcul (30), les facteurs de distances (2011) indiquant les longueurs effectives de liaison de réseau en fonction de la distance aérienne, et la probabilité déterminable, si une longueur déterminée de liaison réseau est plus courte ou plus longue que leur longueur effective de réseau, étant définie par un facteur de sécurité (2012),

**en ce qu'**en se basant sur un ou plusieurs facteurs de distance (2010), sur le facteur de sécurité (2012) et les coordonnées géographiques de l'émetteur (10) et du récepteur (11) de la liaison réseau à classifier (12), la longueur effective de réseau est définie (1010) au moyen de l'unité de calcul (30) et est associée à la liaison réseau à classifier (12) pour être stockée sur un support de données de l'unité de calcul (30),

**en ce qu'**au moins un facteur de répartition d'affaiblissement (2020) est défini (3020) en se basant sur des données connues (5000) de liaisons réseau et est transmis à un support de données de l'unité de calcul (30), au moins un facteur de répartition d'affaiblissement (2020) indique le rapport des affaiblissements des différents tronçons de liaison d'une liaison réseau entre eux,

que les marges de transfert de données (2030) sont défini (3030) pour la détermination des débits maximaux de données pour différents types de modem, sont associées à une longueur physique (13) et une épaisseur de câble (141, 142, 143, 144) d'une liaison réseau (12) et sont stockées sur un support de données de l'unité de calcul (30), des spectres de performance pour les types de modem étant mesurés au moyen d'un dispositif de mesure de performance (20), des forces de signaux effectives et des niveau de grésillement étant définis au moyen de l'unité de calcul (30) en se basant sur les spectres de performance, et les marges de transfert de données (2030) pour un débit binaire prédéfini étant déterminées au moyen de modules de transformation de Gauss (31 ) en se basant sur les forces de signal et les niveaux de grésillement pour diverses modulations de transfert de données et/ou codages de modulation,

et **en ce qu'**en se basant sur la longueur effective de liaison réseau, des facteurs de répartition d'affaiblissement (2020) et les marges de transfert de données (2030), la liaison réseau à classifier est classifiée (1040) au moyen de l'unité de calcul (30) en fonction de son débit de données maximal.

2. Procédé selon la revendication 1, **caractérisé en ce qu'**en tant que facteur de distance (2011 ), il est défini un facteur de pente et une abscisse au moyen de l'unité de calcul (30), une dépendance linéaire étant définie entre la distance aérienne et la longueur effective de liaison réseau.

3. Procédé selon la revendication 1, **caractérisé en ce qu'**au moyen de l'unité de calcul (30), les facteurs de distance (2011 ) sont définies comme des paramètres d'un polynôme d'au moins deux degrés.

4. Procédé selon l'une des revendications 1 à 3, **caractérisé en ce qu'**au moyen du facteur de sécurité (2012), il est sélectionné une probabilité comprise entre 0,85 et 0,95.

5. Procédé selon l'une des revendications 1 à 4, **caractérisé en ce que** le facteur de sécurité (2012) présente une valeur comprise entre 700 et 800.

6. Procédé selon l'une des revendications 1 à 5, **caractérisé en ce qu'**au moyen d'un facteur de répartition d'affaiblissement (2020), une dépendance linéaire des affaiblissements entre eux est définie.

7. Procédé selon l'une des revendications 1 à 6, **caractérisé en ce que** l'unité de calcul (30) définit des marges corrigées de transfert de données au moyen d'au moins un facteur de correction en se basant sur les marges de transfert de données stockées (2030), les associe aux longueurs respectives physiques (13) et aux épaisseurs de câbles (141, 142, 143, 144) de la liaison réseau (12) et elles sont stockées sur un support de données de l'unité de calcul (30), au moins un facteur de correction comprenant une divergence moyenne des marges stockées de transfert de données par rapport aux marges de transfert de données effectives et/ou un facteur d'égalisateur pour la correction de la syntonisation d'égalisateur.

8. Procédé selon la revendication 7, **caractérisé en ce que** le facteur de correction reflète une dépendance non linéaire par rapport aux longueurs physiques (13) et/ou aux épaisseurs de câbles (141, 142 143, 144).

9. Procédé selon l'une des revendications 1 à 8, **caractérisé en ce que** les niveaux de grésillement sont définis au moyen de l'unité de calcul (30) au moins en fonction de paramètres de diaphonie et du nombre des sources perturbatrices en se basant sur les spectres de performances.

10. Procédé selon l'une des revendications 1 à 9, **caractérisé en ce que** le spectre de performance est mesuré en fonction de la fréquence de transmission pour les types de modem ADSL et/ou SDSL et/ou HDSL et/ou VDSL (101, 102, 103, 104).

11. Procédé selon la revendication 10, **caractérisé en ce que** les types de modem possibles SDSL (101, 102, 103, 104) comprennent au moins un type de modem G.991.2 et/ou les types de modem ADSL (101, 102, 103, 104) au moins un type de modem G.992.2.

12. Procédé selon l'une des revendications 1 à 11, **caractérisé en ce qu'**au moyen du module de transformation de gauss (31), les marges de transfert de données sont définies pour au moins les modulations de transfert de données 2B1Q et/ou CAP et/ou DMT et/ou PAM.

13. Procédé selon l'une des revendications 1 à 12, **caractérisé en ce qu'**au moyen du module de transformation de gauss (31), les marges de transfert de données sont définies pour au moins les codages de modulation en treillis.

14. Procédé pour la classification de liaisons de réseaux, des coordonnées géographiques d'un émetteur (10) et d'un récepteur (11) d'une liaison réseau à classifier (12) étant connues, **caractérisé en ce qu'**en

en se basant sur des données connues (5000) de liaisons réseau au moyen d'une unité de calcul (30), un ou plusieurs facteurs de distance (2011) sont déterminés (3010) et sont associés à une probabilité déterminable et sont transmis à un support de données de l'unité de calcul (30), les facteurs de distances (2011) indiquant les longueurs effectives de liaison de réseau en fonction de la distance aérienne, et la probabilité déterminable, si une longueur déterminée de liaison de réseau est plus courte ou plus longue que leur longueur effective de réseau, étant définie par un facteur de sécurité (2012),

**en ce qu'**en se basant sur un ou plusieurs facteurs de distance (2010), sur le facteur de sécurité (2012) et les coordonnées géographiques de l'émetteur (10) et du récepteur (11) de la liaison réseau à classifier (12), la longueur effective de réseau est définie (1010) au moyen de l'unité de calcul (30) et est associée à la liaison réseau à classifier (12) pour être stockée sur un support de données de l'unité de calcul (30),

**en ce qu'**au moins un facteur de répartition d'affaiblissement (2020) est défini (3020) en se basant sur des données connues (5000) de liaisons réseau et est transmis à un support de données de l'unité de calcul (30), au moins un facteur de répartition d'affaiblissement (2020) indiquant le rapport des affaiblissements des différents tronçons de liaison d'une liaison de réseau entre eux,

que des débits binaires (2030) sont définis pour la détermination des débits maximaux de données pour différents types de modem, sont associés à une longueur physique (13) et à une épaisseur de câble (141, 142, 143, 144) d'une liaison de réseau (12) et sont stockés sur un support de données de l'unité de calcul (30), des spectres de performances pour les types de modem étant mesurés au moyen d'un dispositif de mesure de performance (20), des forces de signaux effectives et des niveaux de grésillement étant définis au moyen de l'unité de calcul (30) en se basant sur les spectres de performances, et les débits

binaires (2030) pour une marge de transfert de données prédéfinies étant déterminés au moyen de modules de transformation de Gauss (31) en se basant sur les forces de signal et les niveaux de grésillement pour diverses modulations de transfert de données et/ou de codages de modulation,

et **en ce qu'**en se basant sur la longueur de liaison réseau effective, des facteurs de répartition d'affaiblissement (2020) et les marges de transfert de données (2030), la liaison réseau à classifier est classifiée (1040) au moyen de l'unité de calcul (30) en fonction de son débit de données maximal.

15. Procédé selon la revendication 14, **caractérisé en ce qu'**en tant que facteur de distance (2011), il est défini un facteur de pente et une abscisse au moyen de l'unité de calcul (30), une dépendance linéaire étant définie entre la distance aérienne et la longueur effective de liaison de réseau.

16. Procédé selon la revendication 14, **caractérisé en ce qu'**au moyen de l'unité de calcul (30), les facteurs de distance (2011) sont définis comme des paramètres d'un polynôme d'au moins deux degrés.

17. Procédé selon l'une des revendications 14 à 16, **caractérisé en ce qu'**au moyen du facteur de sécurité (2012), il est sélectionné une probabilité comprise entre 0,85 et 0,95.

18. Procédé selon l'une des revendications 14 à 17, **caractérisé en ce que** le facteur de sécurité (2012) présente une valeur comprise entre 700 et 800.

19. Procédé selon l'une des revendications 14 à 18, **caractérisé en ce que** les débits binaires pour une marge de transfert de données sont définis entre 3 et 9 dB au moyen du module de transformation de Gauss (31).

20. Procédé selon l'une des revendications 14 à 18, **caractérisé en ce qu'**au moyen du module de transformation de gauss (31), les débits binaires sont définis pour une marge de transfert de données de 6 dB.

21. Procédé selon l'une des revendications 14 à 20, **caractérisé en ce que** l'unité de calcul (30) définit des marges corrigées de transfert de données au moyen d'au moins un facteur de correction en se basant sur les marges de transfert de données stockées (203), les associe aux longueurs respectives physiques (13) et aux épaisseurs de câbles (141, 142, 143, 144) de la liaison réseau (12) et elles sont stockées sur un support de données de l'unité de calcul (30), au moins un facteur de correction comprenant une divergence moyenne des marges stockées de transfert de données par rapport aux marges de transfert de données effectives et/ou un facteur d'égalisateur pour la correction de la syntonisation d'égalisateur.

22. Procédé selon la revendication 21, **caractérisé en ce que** le facteur de correction reflète une dépendance non linéaire par rapport aux longueurs physiques (13) et/ou aux épaisseurs de câbles (141, 142 143, 144).

23. Procédé selon l'une des revendications 14 à 22, **caractérisé en ce que** les niveaux de grésillement sont définis au moyen de l'unité de calcul (30) au moins en fonction de paramètres de diaphonie et du nombre des sources perturbatrices en se basant sur les spectres de performance.

24. Procédé selon l'une des revendications 14 à 23, **caractérisé en ce que** le spectre de performance est mesuré en fonction de la fréquence de transmission pour les types de modem ADSL et/ou SDSL et/ou HDSL et/ou VDSL (101, 102, 103, 104).

25. Procédé selon la revendication 24, **caractérisé en ce que** les types de modem possibles SDSL (101, 102, 103, 104) comprennent au moins un type de modem G.991.2 et/ou les types de modem ADSL (101, 102, 103, 104) au moins un type de modem G.992.2.

26. Procédé selon l'une des revendications 14 à 25, **caractérisé en ce que** les débits binaires pour au moins les modulations de transfert de données 2B1 Q et/ou CAP et/ou DMT et/ou PAM sont définis au moyen du module de transformation de gauss (31).

27. Procédé selon l'une des revendications 14 à 26, **caractérisé en ce que** qu'au moyen du module de transformation de gauss (31), les marges de transfert de données sont définies pour au moins les codages de modulation en treillis.

28. Dispositif pour la classification de liaisons réseau, des coordonnées géographiques d'un émetteur (10) et d'un récepteur (11) d'une liaison réseau à classifier (12) étant connues, **caractérisé en ce que**
    le dispositif comprend une unité de calcul (30) pour la détermination et le stockage d'un ou de plusieurs facteurs de distance (2011) d'une probabilité déterminable en se basant sur des données connues (5000) de liaisons réseau, les facteurs de distances (2011) indiquant les longueurs effectives de liaison de réseau en fonction de la distance aérienne, et la probabilité déterminable, si une longueur déterminée de liaison de réseau est plus courte ou plus longue que sa longueur effective de réseau, étant définie par un facteur de sécurité (2012),
    **en ce que** l'unité de calcul (30) comprend des moyens pour la détermination et le stockage d'au au moins un facteur de répartition d'affaiblissement (2020) en se basant sur des données connues (5000) de liaisons réseau et au moins un facteur de répartition d'affaiblissement (2020) indiquant le rapport des affaiblissements des différents tronçons de liaison d'une liaison réseau entre eux,
    **en ce que** le dispositif comprend un dispositif de mesure de performance (20) pour la mesure de performances pour différents types de modem, des moyens (30) pour la détermination de forces de signaux effectives et des niveau de grésillement en se basant sur les spectres de performances ainsi qu'un module de transformation de gauss (31) pour la définition et le stockage de marges de transfert de données (2030) en se basant sur les forces de signal et les niveaux de grésillement pour diverses modulations de transfert de données et/ou de codages de modulation et pour un débit binaire prédéfini.

FIG. 1

EP 1 444 819 B1

**FIG. 2**

**FIG. 3**

FIG. 4

$D_e$[m]

**FIG. 5**

$D_a$[m]

N

**FIG. 6**

$\triangle D$[m]

**FIG. 7**

**FIG. 8**

FIG. 9